(19) Europäisches Patentamt
European Patent Office
Office européen des brevets

(11) **EP 2 369 319 B1**

(12) **EUROPEAN PATENT SPECIFICATION**

(45) Date of publication and mention
of the grant of the patent:
**29.07.2015 Bulletin 2015/31**

(51) Int Cl.:
*G01M 11/02* (2006.01)    *G01B 11/24* (2006.01)

(21) Application number: **11159211.9**

(22) Date of filing: **22.03.2011**

(54) **Aspheric object measuring method and apparatus**

Verfahren und Vorrichtung zum Messen eines asphärischen Objekts

Procédé et dispositif de mesure d'objets asphériques

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.03.2010 JP 2010067007**

(43) Date of publication of application:
**28.09.2011 Bulletin 2011/39**

(73) Proprietor: **Fujifilm Corporation
Minato-ku
Tokyo (JP)**

(72) Inventors:
• **Sun, Ping
Saitama (JP)**
• **Ge, Zongtao
Saitama (JP)**

(74) Representative: **Klunker . Schmitt-Nilson . Hirsch
Patentanwälte
Destouchesstraße 68
80796 München (DE)**

(56) References cited:
**JP-A- 2007 033 343      US-A1- 2005 157 311
US-A1- 2008 304 080**

**Description**

BACKGROUND OF THE INVENTION

1. Field of the Invention

The present invention relates to a method of and an apparatus for measuring an aspheric obj ect or element, e.g. an aspheric lens or a bi-aspheric mirror, which is used in many kinds of optical devices such as digital cameras and optical sensors, to detect misalignment between front and rear surfaces (first and second specimen surfaces) of the aspheric object.

2. Description of the Related Art

When an aspheric lens is formed by molding, the molded lens may sometimes suffer misalignment between its opposite surfaces from deviation of the relative positions of the molding dies. The misalignment may include decentration (deviation of a rotational axis of one surface of the aspheric lens from a rotational axis of the other surface) and tilt (inclination of the rotational axis of one surface to the rotational axis of the other surface). Due to the mechanism of the molding dies, it is impossible to prevent the lens misalignment completely, but it is desirable to design and correct the molding dies so as to reduce the lens misalignment to the minimum because it will increase aberrations, especially rotationally asymmetric aberration, of the molded aspheric lens. For this purpose, it is important to measure the actual amounts of the decentration and tilt of the molded lens accurately.

In a known method of measuring the relative decentration and tilt between opposite lens surfaces of an aspheric lens, a geometry measuring apparatus with contact probes is used to measure the geometry of each of the two lens surfaces, to determine the relative decentration and tilt on the basis of the measured geometries. This conventional method, however, has a problem in that it takes more than several hours for the measurement of one lens.

A measuring method that can substantially save time has recently been suggested in JPA 2007-033343, wherein a wave front of transmitted light through an aspheric lens is measured by an interferometer to obtain data of the transmitted wave front, and a coma aberration of the transmitted wave front is calculated based on the obtained data. Then, a relative decentration amount (interplanar decentration amount) and a relative tilt amount (interplanar tilt amount) are derived from the calculated coma aberration. Specifically, the transmitted wave front data is approximated with a Zernike polynomial. Among coefficients of the respective terms of the obtained Zernike polynomial, coefficient $Z_6$ or $Z_7$ having a value that varies with the third order coma aberration, and the coefficient $Z_{13}$ or $Z_{14}$ having a value that varies with the fifth order coma aberration are used as the basis for determining the decentration and tilt.

Another measuring method is known from US 2008/304080.

As being designed to measure the transmitted wave front, the method disclosed in the above prior art has the following problem.

The shape or pattern of the wave front of the transmitted light is significantly influenced by the refractive index distribution inside the aspherical lens as well as the decentration and the tilt between the lens surfaces to be inspected. Accordingly, it is difficult for the above prior art method to measure the decentration and the tilt with accuracy on the basis of the data of the transmitted wave front while eliminating the influence of the refractive index distribution of the lens material.

Moreover, the above prior art method can hardly work for the misalignment measurement of such an aspheric object that does not transmit measuring beams from the interferometer, e.g. an aspheric lens served for a ray of specific wavelength, such as X-ray, or a bi-aspheric mirror having rotationally symmetric aspheric reflective surfaces.

SUMMARY OF THE INVENTION

In view of the foregoing, an object of the present invention is to provide a method and an apparatus for measuring an aspheric object, which allows to measure the decentration amount and the tilt amount between opposite surfaces of the aspheric object without any influence of the refractive index distribution inside the aspheric object, or even while the aspheric object does not transmit measuring beams from interferometers.

To achieve the above and other objects, in an aspect of the present invention, a method of measuring decentration and tilt of a first specimen surface of an aspheric object relative to a second specimen surface of the aspheric object uses first and second interferometers, wherein the relative positions of the first and second interferometers to each other are determined. The first specimen surface is a rotationally symmetric aspheric surface, while the second specimen surface may be a rotationally symmetric aspheric surface or a spherical surface.

The method of the present invention comprises the following steps:

projecting a first measuring beam onto the first specimen surface along a first measuring optical axis of the first interferometer, to capture image data of first interference fringes that are produced by optical interference between a first reflection wave front of the first measuring beam as reflected from the first specimen surface and a first reference wave front of the first interferometer;

projecting a second measuring beam onto the second specimen surface along a second measuring optical axis of the second interferometer, to capture image data of second interference fringes that are produced by optical interference between a second reflection wave front of the second measuring beam as reflected from the second specimen surface and a second reference wave front of the second interferometer;

analyzing the image data of the first interference fringes to acquire geometric data of the first specimen surface;

analyzing the image data of the second interference fringes to acquire geometric data of the second specimen surface;

approximating the geometric data of the first specimen surface with a Zernike polynomial to calculate, among coefficients of respective terms of the Zernike polynomial, a value of a first shift amount proportionality coefficient that is variable in proportion to a shift amount of the first specimen surface in a perpendicular direction to the first measuring optical axis and a value of a first tilt amount proportionality coefficient that is variable in proportion to a tilt amount of the first specimen surface to the first measuring optical axis;

approximating the geometric data of the second specimen surface with a Zernike polynomial to calculate, among coefficients of respective terms of the Zernike polynomial, a value of a second shift amount proportionality coefficient that is variable in proportion to a shift amount of the second specimen surface in a perpendicular direction to the second measuring optical axis and a value of a second tilt amount proportionality coefficient that is variable in proportion to a tilt amount of the second specimen surface to the second measuring optical axis;

calculating a value of decentricity of an apex of the first specimen surface to the first measuring optical axis on the basis of the geometric data of the first specimen surface, the value of apex decentricity varying with the shift amount of the first specimen surface in the perpendicular direction to the first measuring optical axis and the tilt amount of the first specimen surface to the first measuring optical axis;

calculating a value of decentricity of an apex of the second specimen surface to the first measuring optical axis on the basis of the geometric data of the second specimen surface, the value of apex decentricity varying with the shift amount of the second specimen surface in the perpendicular direction to the second measuring optical axis and the tilt amount of the second specimen surface to the second measuring optical axis;

calculating a shift amount and a tilt amount of the first specimen surface to the first measuring optical axis on the basis of the values of the first shift amount proportionality coefficient, the first tilt amount proportionality coefficient and the apex decentricity of the first specimen surface;

calculating a shift amount and a tilt amount of the second specimen surface to the second measuring optical axis on the basis of the values of the second shift amount proportionality coefficient, the second tilt amount proportionality coefficient and the apex decentricity of the second specimen surface; and

calculating amounts of the relative decentration and tilt of the first specimen surface to the second specimen surface on the basis of the shift amount and the tilt amount of the first specimen surface, the shift amount and the tilt amount of the second specimen surface, and information on the relative positions of the first and second interferometers.

The above Zernike polynomial is a Zernike polynomial $Z(\rho, \theta)$ of the fourth or higher order that is expressed in the form of polar coordinates, wherein $\rho$ represents a distance from a pole and $\theta$ a tilt angle to an initial line. The first shift amount proportionality coefficient and the second shift amount proportionality coefficient are a coefficient $Z_1$ of a term expressed by a formula $\rho \cos \theta$ and a coefficient $Z_2$ of a term expressed by a formula $\rho \sin \theta$.

In another aspect, the present invention provides an apparatus that measures decentration and tilt of a first specimen surface of an aspheric object relative to a second specimen surface of the aspheric object, wherein the first specimen surface is a rotationally symmetric aspheric surface and the second specimen surface may be a rotationally symmetric aspheric surface or a spherical surface.

The measuring apparatus of the present invention comprises first and second interferometers. The first interferometer projects a first measuring beam onto the first specimen surface along a first measuring optical axis, to capture image data of first interference fringes that are produced by optical interference between a first reflection wave front of the first measuring beam as reflected from the first specimen surface and a first reference wave front of the first interferometer. The second interferometer projects a second measuring beam onto the second specimen surface along a second measuring optical axis, to capture image data of second interference fringes that are produced by optical interference between a second reflection wave front of the second measuring beam as reflected from the second specimen surface and a second reference wave front of the second interferometer, wherein the relative position of the second interferometer to the first interferometer is determined. The measuring apparatus of the present invention further comprises first and second specimen surface geometric data acquiring devices, first and second Zernike coefficient calculators, first and second apex decentricity calculators, and first and second shift and tilt amount calculators. The first and second specimen surface geometric data acquiring devices analyze the image data of the first interference fringes and the image data of the second interference fringes to acquire geometric data of the first and second specimen surfaces respectively. The first and second Zernike coefficient calculators approximate the geometric data of the first and second specimen surfaces with Zernike polynomials to calculate, among coefficients of respective terms of the Zernike polynomial, values of a first shift amount proportionality coefficient that is variable in proportion to a shift amount of the first specimen surface in a perpendicular direction to the first measuring optical axis, a value of a first tilt amount proportionality coefficient that is variable in proportion to a tilt amount of the first specimen surface to the first measuring optical axis, a value of a second shift amount proportionality coefficient that is variable in proportion to a shift amount of the second specimen surface in a perpendicular direction to the second measuring optical axis, and a value of a second tilt amount proportionality coefficient that is variable in proportion to a tilt amount of the second specimen surface to the second measuring optical axis. The first and second apex decentricity calculators calculate a value of decentricity of an apex of the first specimen surface to the first measuring optical axis and a value of decentricity of an apex of the second specimen surface to the second measuring optical axis on the basis of the geometric data of the first specimen surface and the geometric data of the second specimen surface respectively. The first shift and tilt amount calculator calculates a shift amount and a tilt amount of the first specimen surface to the first measuring optical axis on the basis of the values of the first shift amount proportionality coefficient, the first tilt amount proportionality coefficient and the apex decentricity of the first specimen surface. The second shift and tilt amount calculator calculates a shift amount and a tilt amount of the second specimen surface to the second measuring optical axis on the basis of the values of the second shift amount proportionality coefficient, the second tilt amount proportionality coefficient and the second apex decentricity of the second specimen surface. The measuring apparatus of the present invention further comprises a device for determining amounts of the relative decentration and tilt of the first specimen surface to the second specimen surface on the basis of the calculated shift and tilt amounts of the first specimen surface, the calculated shift and tilt amounts of the second specimen surface, and information on the relative positions of the first and second interferometers.

When the second specimen surface is spherical, only the shift amount of the second specimen surface will be measured with respect to the second measuring optical axis, but no tilt amount will be provided for the spherical surface. Therefore, as for the spherical second specimen surface, the above shift and tilt amount calculation in the method and the apparatus of the present invention should be carried out on the assumption that the tilt amount of the second specimen surface is zero.

In the present invention, the apex of the first specimen surface is a point in a central area of the first specimen surface, at which the first specimen surface is perpendicular to the first measuring optical axis; the position of the apex in the first specimen surface changes with a change in tilt amount of the first specimen surface to the first measuring optical axis. The apex decentricity of the first specimen surface to the first measuring optical axis is a distance from the apex of the first specimen surface to the first measuring optical axis in the perpendicular direction to the first measuring optical axis.

Likewise, the apex of the second specimen surface is a point in a central area of the second specimen surface, at which the second specimen surface is perpendicular to the second measuring optical axis; the position of the apex in the second specimen surface changes with a change in tilt amount of the second specimen surface to the second measuring optical axis. The apex decentricity of the second specimen surface to the second measuring optical axis is a distance from the apex of the second specimen surface to the second measuring optical axis in the perpendicular direction to the second measuring optical axis.

As the relative decentration and tilt between the first and second specimen surfaces of the aspheric object are determined on the basis of the geometric data of these two surfaces which are acquired from interference fringes of the respective wave fronts of the reflected light from the first and second specimen surfaces, the geometric data will not be affected by the refraction index distribution inside the aspheric object, contrary to the prior art that is based on measurement of wave fronts of transmitted light through the specimen. In addition, the present invention makes it possible to measure the relative decentration and tilt between opposite surfaces of an aspheric object that does not transmit the measuring beams from the interferometers.

BRIEF DESCRIPTION OF THE DRAWINGS

The above and other objects and advantages of the present invention will be more apparent from the following detailed description of the preferred embodiments when read in connection with the accompanied drawings, wherein like reference numerals designate like or corresponding parts throughout the several views, and wherein:

Figure 1 is a schematic diagram illustrating an aspheric object measuring apparatus in accordance with an embodiment of the present invention;
Figure 2 is a schematic diagram illustrating an optical system of the aspheric object measuring apparatus of Fig.1;
Figure 3 is a block diagram illustrating an analyzer controller shown in Fig.1;
Figure 4 is a sectional view illustrating an aspheric lens as a subject of inspection;

Figure 5 is an explanatory diagram illustrating the relative positional relationship between a first coordinate system for measurement and a second coordinate system for measurement;

Figure 6 is a diagram illustrating an image simulating first interference fringes;

Figure 7 is a diagram illustrating an image simulating second interference fringes;

Figure 8 is a graph showing the sensitivity of a coefficient $Z_1$ to the tilt of a simulated first lens surface;

Figure 9 is a graph showing the sensitivity of the coefficient $Z_1$ to the tilt of a simulated second lens surface;

Figure 10 is a graph showing the sensitivity of the coefficient $Z_1$ to the shift of the simulated first lens surface;

Figure 11 is a graph showing the sensitivity of the coefficient $Z_1$ to the shift of the simulated second lens surface;

Figure 12 is a graph showing the sensitivity of the apex decentricity to the tilt of the simulated first lens surface;

Figure 13 is a graph showing the sensitivity of the apex decentricity to the shift of the simulated first lens surface;

Figure 14 is a graph showing the sensitivity of the apex decentricity to the tilt of the simulated second lens surface;

Figure 15 is a graph showing the sensitivity of the apex decentricity to the shift of the simulated second lens surface;

Figure 16 is a graph showing shift amount calculation errors with respect to the simulated first lens surface;

Figure 17 is a graph showing shift amount calculation errors with respect to the simulated second lens surface;

Figure 18 is a graph showing tilt amount calculation errors with respect to the simulated first lens surface; and

Figure 19 is a graph showing tilt amount calculation errors with respect to the simulated second lens surface.

DETAILED DESCRIPTION OF THE PREFERRED EMBODIMENTS

An embodiment of the present invention will now be described in detail with reference to the above mentioned drawings. Note that the drawings do not show the detailed geometry and structure of the embodiment but schematically illustrate the embodiments, modifying the size and the spacing of the components for convenience sake.

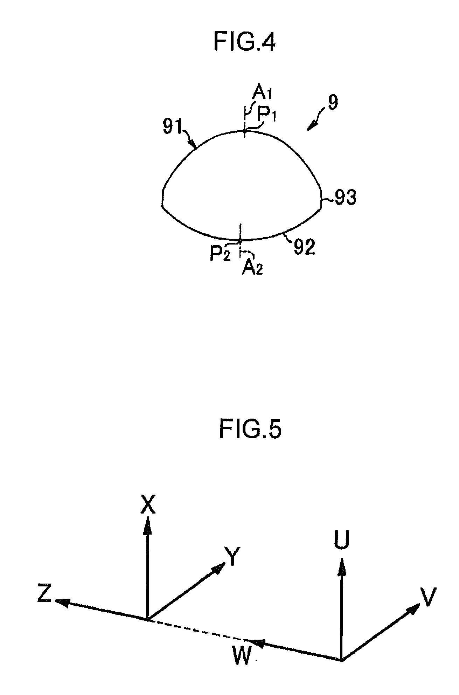

Referring first to Fig. 4, an aspheric lens 9 as an aspheric object to be measured in the present embodiment will be explained with respect to the composition and terms for measurement.

As shown in Fig.4, the aspheric lens 9 is designed to have a first lens surface 91 (a first specimen surface of the present embodiment), a second lens surface 92 (a second specimen surface of the present embodiment), and a cylindrical side surface 93. The first lens surface 91 constitutes a rotationally symmetric aspheric surface about a first rotational axis A1, whereas the second lens surface 92 constitutes a rotational aspheric surface about a second rotational axis A2.

The first lens surface 91 intersects with the first rotational axis A1 at a center point P1 of the first lens surface 91, and the center point P1 is designed to be an umbilical point; the normal curvature at the center point P1 is equal in every tangential direction to the first lens surface 91. Likewise, the second lens surface 92 intersects with the second rotational axis A2 at a center point P2 of the second lens surface 92, and the center point P2 is designed to be an umbilical point; the normal curvature at the center point P2 is equal in every tangential direction to the second lens surface 92.

The axes A1 and A2 are designed to be coincident or in alignment with each other. Because of manufacture errors or the like, however, these axes cannot always be in alignment with each other, which may be called misalignment and include decentration and tilt of these axes A1 and A2 relative to each other. For illustrative purpose, Fig. 4 shows a case where these axes A1 and A2 are misaligned in an exaggerated manner, although the magnitude of such an error or deviation is normally in the order of wavelength of the light. In the present embodiment, the relative tilt and decentration between the lens surfaces 91 and 92 of the aspheric lens 9 shall be defined as follows.

Decentration: When the center point P1 of the first lens surface 91 (the intersection between the first lens surface 91 and the first rotational axis A1) and the center point P2 of the second lens surface 92 (the intersection between the second lens surface 92 and the second rotational axis A2) are projected onto a virtual plane that is vertical to the rotational axis A1 or A2, a distance between the projected points of the center points P1 and P2 on the virtual plane shall be defined as the amount of decentration. An orthogonal coordinate system may be defined in the virtual plane so as to decompose the decentration into components in the directions of the coordinate axes.

Tilt: An angle formed by the axes A1 and A2 (or an angle formed by direction vectors of the axes A1 and A2 when these axes do not intersect with each other) shall be defined as the amount of tilt. An orthogonal coordinate system may be defined in a virtual plane so as to decompose the tilt into components in the directions of the coordinate axes.

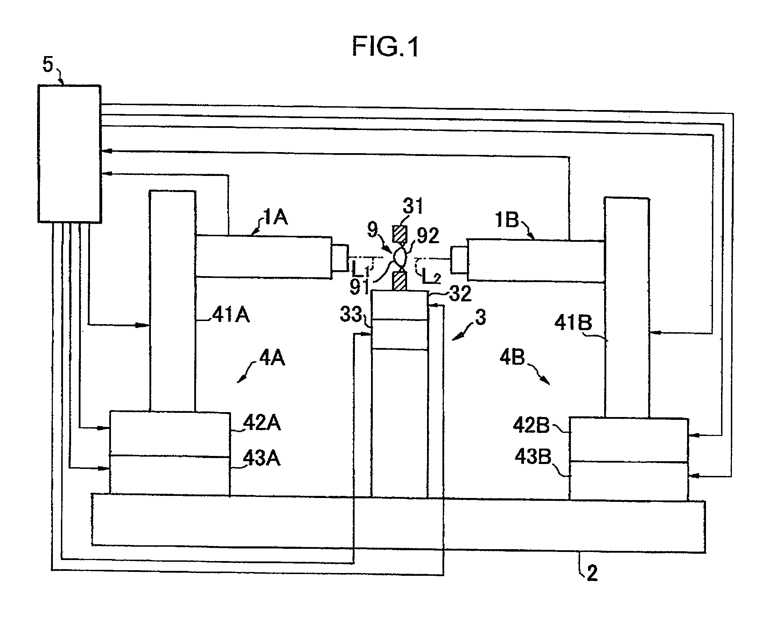

A structure of an aspheric object measuring apparatus in accordance with an embodiment of the present invention will now be described with reference to Figs. 1 to 3. The aspheric object measuring apparatus shown in Fig.1 is provided to measure and analyze the decentration and tilt of the above mentioned aspheric lens 9. The aspheric object measuring apparatus includes a first interferometer 1A disposed on the side of the first lens surface 91 of the aspheric lens 9, a second interferometer 1B disposed on the side of the second lens surface 92, a test object alignment section 3 for aligning a test object for inspection, a first positioning section 4A for positioning the first interferometer 1A, a second positioning section 4B for positioning the second interferometer 1B, and a controller analyzer 5 that executes measurement and analysis of the decentration and the tilt of the aspheric lens 9 and other processes. The obj ect alignment section 3 and the first and second interferometer positioning sections 4A and 4B are mounted on an optical board 2.

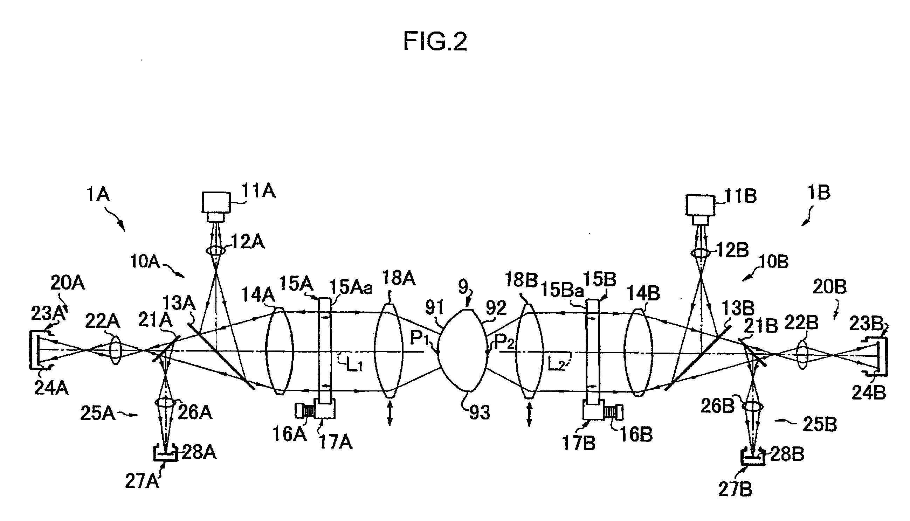

As shown in Fig.2, the first interferometer 1A includes a first interference optical system 10A, a first interference fringe imaging system 20A and a first alignment imaging system 25A. The first interference optical system 10A constitutes a Fizeau type optical arrangement, which includes a light source 11A for outputting a highly coherent beam, a beam expanding lens 12A for expanding the beam diameter of the light from the light source 11A, a beam splitter 13A for reflecting the beam from the beam expanding lens 12A to the right hand side in the drawing, a collimator lens 14A for collimating the beam from the beam splitter 13A, a flat standard plate 15A, and an objective lens 18A. A fragment of plane waves from the collimator lens 14A is reflected backward from a reference standard flat surface or reference plane 15Aa of the flat standard plate 15A, to be a first reference beam. The remaining plane waves are let pass through the flat standard plate 15A along a first measuring optical axis L1. The objective lens 18A converts the plane waves from the flat standard plate 15A to a first measuring beam that is composed of spherical waves, and projects the first measuring beam onto a center area of the first lens surface 91, i.e. an area including the above-mentioned first center point P1. Thus, the light reflected from the first lens surface 91 merges with the first reference beam to get a first interfering light.

The flat standard plate 15A is held by a fringe scan adaptor 17A that is provided with a piezo element 16A such that the flat standard plate 15A is subtly movable in the direction of the first measuring optical axis L1 during the execution of fringe scanning measurement or the like. The objective lens 18A is configured to be retractable from the first measuring optical axis L1.

The first interference fringe imaging system 20A serves for the measurement of the aspheric lens 9 (the first lens surface 91), and includes an imaging lens 22A and a camera 23A having a 2D or planer image sensor 24A such as CCD or CMOS image sensor. The imaging lens 22A converges the first interfering light traveling leftward in the drawing through the beam splitter 13A and a beam splitter 21A, to form interference fringes (first interference fringes) on the 2D image sensor 24A, thereby to capture image data of the interference fringes.

The alignment imaging system 25A serves for alignment of relative positions of the first and second interferometers 1A and 1B to each other. The alignment imaging system 25A includes an imaging lens 26A for converging a beam reflected downward from the beam splitter 21A in the drawing, and a camera 27A having a 2D image sensor 28A such as CCD or CMOS image sensor.

The second interferometer 1B has the same structure as the first interferometer 1A, including the second interference optical system 10B, a second interference fringe imaging system 20B and a second alignment imaging system 25B. The second interference optical system 10B has a Fizeau type optical arrangement, which includes a light source 11B for outputting a highly coherent beam, a beam expanding lens 12B for expanding the beam diameter of the light from the light source 11B, a beam splitter 13B for reflecting the beam from the beam expanding lens 12B to the right hand side in the drawing, a collimator lens 14B for collimating the beam from the beam splitter 13B, a flat standard plate 15B, and an objective lens 18B. Plane waves from the collimator lens 14B are partly reflected backward at a reference standard flat surface 15Ba of the referential flat plate 15B, to be a second reference beam. The remaining plane waves are let pass through the flat standard plate 15B along a second measuring optical axis L2. The objective lens 18B converts the plane waves from the flat standard plate 15B to a second measuring beam that is composed of spherical waves, and projects the second measuring beam onto a center area of the first lens surface 91, i.e. an area including the above-mentioned second center point P2. Thus, the beam reflected from the first lens surface 91 merges with the second reference beam to get a second interfering light.

The flat standard plate 15B is held by a fringe scan adaptor 17B that is provided with a piezo element 16B such that the flat standard plate 15B is subtly movable in the direction of the second measuring optical axis L2 during the execution of fringe scanning measurement or the like. The objective lens 18B is configured to be retractable from the second measuring optical axis L2.

The second interference fringe imaging system 20B serves for the measurement of the aspheric lens 9 (the second lens surface 92), and includes an imaging lens 22B and a camera 23B having a 2D or planer image sensor 24B such as CCD or CMOS image sensor. The imaging lens 22B converges the second interfering light traveling rightward in the drawing through the beam splitter 13B and a beam splitter 21B, to form interference fringes (second interference fringes) on the 2D image sensor 24B, thereby to capture image data of the interference fringes.

The alignment imaging system 25B serves for alignment of relative positions of the first and second interferometers 1A and 1B. The alignment imaging system 25B includes an imaging lens 26B for converging a beam reflected downward from the beam splitter 21B in the drawing, and a camera 27B having a 2D image sensor 28B such as CCD or CMOS image sensor.

On the other hand, as shown in Fig.1, the test object alignment section 3 includes a holder stage 31 for holding the aspheric lens 9, a lens inclination adjusting stage 32 for adjusting the inclination of the aspheric lens 9 as being held on the holder stage 31 relative to the first and second measuring optical axes L1 and L2, and a lens position adjusting stage 33 for adjusting the position of the aspheric lens 9 relative to the first and second measuring optical axes L1 and L2 in the right and left directions in the drawing as well as in the perpendicular direction to the plane of the drawing.

The first interferometer positioning section 4A includes a first Z stage 41A for holding the first interferometer 1A movable in a vertical direction Z, a first XY stage 42A for holding the first interferometer 1A movable in the right and left directions in the drawing as well as in the perpendicular direction to the plane of the drawing, and a first interferometer inclination adjusting stage 43A that adjusts the inclination of the first interferometer 1A through the first XY stage 42A and the first Z stage 41A.

Likewise, the second interferometer positioning section 4B includes a second Z stage 41B for holding the second interferometer 1B movable in a vertical direction Z, a second XY stage 42B for holding the second interferometer 1B movable in the right and left directions in the drawing as well as in the perpendicular direction to the plane of the drawing, and a second interferometer inclination adjusting stage 43B that adjusts the inclination of the second interferometer 1B through the second XY stage 42B and the second Z stage 41B.

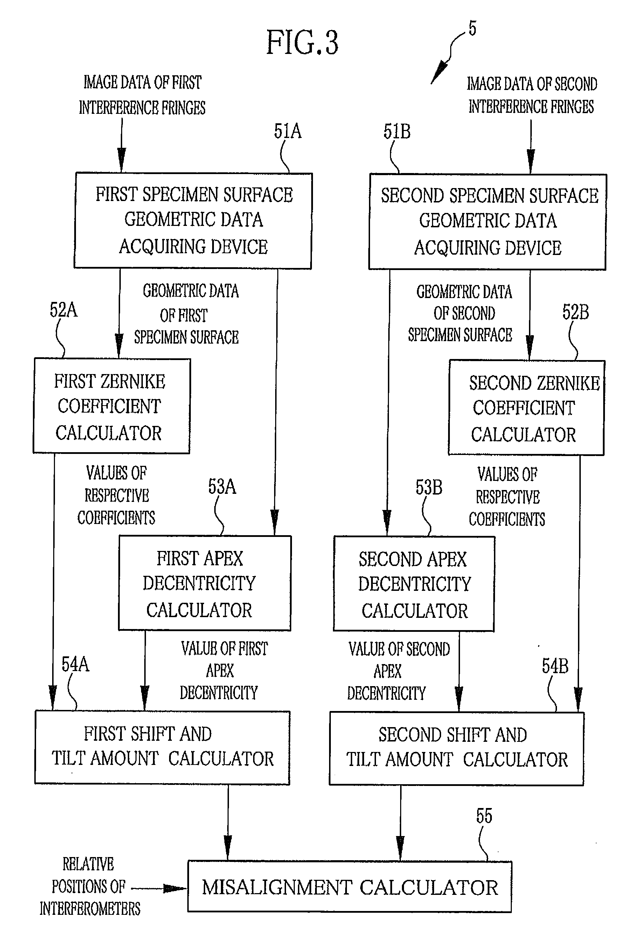

The controller analyzer 5 is constituted of a computer and the like, which can acquire geometric data about the respective central areas of the first and second lens surfaces 91 and 92 (first specimen surface geometric data and second specimen surface geometric data), and control driving the respective stages of the test object alignment section 3, the first and second interferometer positioning sections 4A and 4B. As shown in Fig. 3, the controller analyzer 5 includes a first specimen surface geometric data acquiring device 51A, a second specimen surface geometric data acquiring device 51B, a first Zernike coefficient calculator 52A, a second Zernike coefficient calculator 52B, a first apex decentricity calculator 53A, a second apex decentricity calculator 53B, a first shift and tilt amount calculator 54A, a second shift and tilt amount calculator 54B, and a misalignment calculator 55.

The first specimen surface geometric data acquiring device 51A acquires first specimen surface geometric data from the image data of the first interference fringes, representing geometric data of the central area of the first lens surface 91 in a first coordinate system for measurement that is defined in the first interferometer 1A.

The second specimen surface geometric data acquiring device 51B acquires second specimen surface geometric data from the image data of the second interference fringes, representing geometric data of the central area of the second lens surface 92 in a second coordinate system for measurement that is defined in the second interferometer 1B.

The first Zernike coefficient calculator 52A approximates the first specimen surface geometric data with a Zernike polynomial, to calculate, among coefficients of the respective terms of the Zernike polynomial, the value of a first shift amount proportionality coefficient that is variable in proportion to the shift amount of the first lens surface 91 in a perpendicular direction to the first measuring optical axis L1, and the value of a first tilt amount proportionality coefficient that is variable in proportion to the tilt amount of the first lens surface 91 with respect to the first measuring optical axis L1.

The second Zernike coefficient calculator 52B approximates the second specimen surface geometric data with a Zernike polynomial, to calculate, among coefficients of the respective terms of the Zernike polynomial, the value of a second shift amount proportionality coefficient that is variable in proportion to the shift amount of the second lens surface 92 in a perpendicular direction to the second measuring optical axis L2, and the value of a second tilt amount proportionality coefficient that is variable in proportion to the tilt amount of the second lens surface 92 with respect to the second measuring optical axis L2.

The first apex decentricity calculator 53A calculates the value of decentricity of the apex of the first lens surface 91 relative to the first measuring optical axis L1 on the basis of the geometric data of the first lens surface 91 acquired by the first specimen surface geometric data acquiring device 51A. The value calculated by the first apex decentricity calculator 53A, which may also be referred to as the first apex decentricity hereinafter, is variable in proportion to the shift amount of the first lens surface 91 in the perpendicular direction to the first measuring optical axis L1 and the tilt amount of the first lens surface 91 to the first measuring optical axis L1.

The second apex decentricity calculator 53B calculates the value of decentricity of the apex of the second lens surface 92 relative to the second measuring optical axis L2 on the basis of the geometric data of the second lens surface 92 acquired by the second specimen surface geometric data acquiring device 51B. The value calculated by the second apex decentricity calculator 53B, which may also be referred to as the second apex decentricity hereinafter, is variable in proportion to the shift amount of the second lens surface 92 in the perpendicular direction to the second measuring optical axis L2 and the tilt amount of the second lens surface 92 to the second measuring optical axis L2.

The first shift and tilt amount calculator 54A calculates a shift amount and a tilt amount of the first lens surface 91 to the first measuring beams axis L1 on the basis of the first shift amount proportionality coefficient and the first tilt amount proportionality coefficient, having the values calculated by the first Zernike coefficient calculator 52A, and the value of the first apex decentricity calculated by the first apex decentricity calculator 53A.

The second shift and tilt amount calculator 54B calculates a shift amount and a tilt amount of the second lens surface 92 to the second measuring beams axis L2 on the basis of the second shift amount proportionality coefficient and the second tilt amount proportionality coefficient, having the values calculated by the second Zernike coefficient calculator 52B, and the value of the second apex decentricity calculated by the second apex decentricity calculator 53B.

The misalignment calculator 55 calculates the amount of the decentration and the amount of the lens tilt on the basis of the shift amount and the tilt amount of the first lens surface 91 as calculated by the first shift and tilt amount calculator 54A, and the shift amount and the tilt amount of the second lens surface 92 as calculated by the second shift and tilt amount calculator 54B, while taking account of the relative position between the first and second interferometers 1A and 1B (the positional relationship between the first and second coordinate systems for measurement).

Now a method of measuring an aspheric object according to an embodiment of the present invention will be described. The aspheric object measuring method according to the present embodiment uses the above aspheric object measuring apparatus.

[1] First, the first and second interferometers 1A and 1B are aligned relative to each other. The alignment of the interferometers 1A and 1B is to bring the first measuring optical axis L1 of the first interferometer 1A into alignment with the second measuring optical axis L2 of the second interferometer 1B, and is carried out manually by an operator using the first and second interferometer positioning sections 4A and 4B. The procedure of the interferometer alignment is as follows:

(a) Retract the objective lenses 18A and 18B of the first and second interferometers 1A and 1B from the first and second measuring optical axes L1 and L2 respectively, and place an parallel flat plate (omitted from the drawings) having two parallel optical flats in between the first and second interferometers 1A and 1B, wherein the parallel flat plate may be held on the holder stage 31. In this stage, the position of the parallel flat plate should be roughly adjusted to make the two optical flats as perpendicular to the first and second measuring optical axes L1 and L2 as possible.

(b) Emit a parallel beam from the first interferometer 1A onto one optical flat of the parallel flat plate (the optical flat on the side of the first interferometer 1A), and capture an image spot formed from a reflected beam from the one optical flat and an image spot formed from a reflected beam from the reference standard flat surface 15Aa through the camera 27A of the alignment imaging system 25A. Adjust the inclination of the first interferometer 1A with the first interferometer inclination adjusting stage 43A so that these two image spots coincide with each other. Through this inclination adjustment, the first measuring optical axis L1 of the first interferometer 1A is made perpendicular to the one optical flat of the parallel flat plate. Alternatively, the camera 23A of the first interference fringe imaging system 20A may be used to capture interference fringes formed by the reflected beam from the one optical flat and the reflected beam from the reference standard flat surface 15Aa, to adjust the inclination of the first interferometer 1A so as to make the interference fringes null.

(c) Likewise, emit a parallel beam from the second interferometer 1B onto the other optical flat of the parallel flat plate (the optical flat on the side of the second interferometer 1B), and capture an image spot formed from a reflected beam from the other optical flat and an image spot formed from a reflected beam from the reference standard flat surface 15Ba through the camera 27B of the alignment imaging system 25B. Adjust the inclination of the second interferometer 1B with the second interferometer inclination adjusting stage 43B so that these two image spots coincide with each other. Through this inclination adjustment, the second measuring optical axis L2 of the second interferometer 1B is made perpendicular to the other optical flat of the parallel flat plate, and hence the first measuring optical axis L1 and the second measuring optical axis L2 are made parallel to each other. Alternatively, the camera 23B of the second interference fringe imaging system 20A may be used to capture interference fringes formed by the reflected beam from the other optical flat and the reflected beam from the reference standard flat surface 15Ba, to adjust the inclination of the second interferometer 1B so as to make the interference fringes null.

(d) Replace the parallel flat plate with a true sphere (omitted from the drawings) that can be regarded as optically completely spherical in between the first and second interferometers 1A and 1B.

(e) Emit a plane wave from the first interferometer 1A onto the true sphere, and capture interference fringes formed by a reflected beam from the true sphere and a reflected beam from the reference standard flat surface 15Aa, the fringes being concentric rings, through the camera 23A of the first interference fringe imaging system 20A. Adjust the position of the first interferometer 1A with the first Z stage 41A and the first XY stage 42A so as to place the first measuring optical axis L1 at the center of these fringes.

(f) Emit a plane wave from the second interferometer 1B onto the true sphere, and capture interference fringes formed by a reflected beam from the true sphere and a reflected beam from the reference standard flat surface 15Ba, the fringes being concentric rings, through the camera 23B of the second interference fringe imaging system 20B. Adjust the position of the second interferometer 1B with the second Z stage 41B and the second XY stage 42B so as to place the second measuring optical axis L2 at the center of these fringes. Through this adjustment the first and second measuring optical axes L1 and L2 are aligned with each other.

Even after the above-described alignment, however, there may be a case where the first measuring optical axis L1 of the first interferometer 1A is not completely aligned with the second measuring optical axis L2 of the second interferometer 1B for some reasons such as mechanical precision of the respective stages. In that case, the relative positions of the first and second measuring optical axes L1 and L2, the tilt and deviation relative to each other, should be detected and memorized as data on these axes 1A and 1B.

[2] Next, the true sphere is put out, and the objective lenses 18A and 18B of the first and second interferometers 1A and 1B are placed on the first and second measuring optical axes L1 and L2 respectively. Also the aspheric lens 9 is mounted on the holder stage 31, to adjust the alignment of the aspheric lens 9 with respect to the first and second interferometers 1A and 1B; the operator manually operate the lens inclination adjusting stage 32 and the lens position adjusting stage 33 so as to position the first center P1 of the first lens surface 91 and the second center P2 of the second lens surface 92 in the vicinity of the first measuring optical axis L1 and in the vicinity of the second measuring optical axis L2 respectively.

[3] Thereafter, the first interferometer 1A projects the first measuring beam toward the center area of the first lens surface 91, and the camera 23A acquires image data of the first interference fringes that are formed by interference between the first measuring beam as reflected from the first lens surface 91 and the first reference beam (first interference fringe acquiring step).

[4] Likewise, the second interferometer 1B projects the second measuring beam toward the center area of the second lens surface 92, and the camera 23B acquires image data of the second interference fringes that are formed by interference between the second measuring beam as reflected from the second lens surface 92 and the second reference beam (second interference fringe acquiring step).

[5] Then, the image data of the first interference fringes is analyzed (for example using general fringe analysis), to acquire the first specimen surface geometric data as geometric data about the central areas of the first lens surfaces 91 in the first coordinate system for measurement, which is defined in the first interferometer 1A (first specimen surface geometric data acquiring step). This process is executed by the first specimen surface geometric data acquiring device 51A shown in Fig.3.

[6] Likewise, the image data of the second interference fringes is analyzed (for example using general fringe analysis), to acquire the second specimen surface geometric data as geometric data about the central areas of the second lens surfaces 92 in the second coordinate system for measurement, which is defined in the second interferometer 1B (second specimen surface geometric data acquiring step). This process is executed by the second specimen surface geometric data acquiring device 51B shown in Fig.3.

The above-mentioned first and second measuring coordinate systems will be described hereinafter. As shown in Fig.5, the first coordinate system for measurement is a right-handed three-dimensional orthogonal coordinate system having X-, Y- and Z-axes which are orthogonal to each other, wherein the Z-axis is set to be identical to the first measuring optical axis L1 of the first interferometer 1A. On the other and, the second coordinate system for measurement is a right-handed three-dimensional orthogonal coordinate system having U-, V- and W-axes which are orthogonal to each other, wherein the W-axis is set to be identical to the second measuring optical axis L2 of the second interferometer 1B. The relative positions of the first and second coordinate systems for measurement are so defined that the X-axis and the U-axis are parallel to each other and oriented in the same direction, that the Y-axis and the V-axis are parallel to each other and oriented in the same direction, and that the Z-axis and the W-axis are aligned and oriented in the same direction when the first and second measuring optical axes L1 and L2 are completely aligned. If the first measuring optical axis L1 does not completely coincide with the second measuring optical axis L2, but deviates from the second measuring optical axis L2, the relative positions of the first and second coordinate systems for measurement are also misaligned. In that case, the deviation is detected as data of relative positions of the first and second interferometers 1A and 1B through the above interferometer alignment step [1], and the relative positions of the first and second coordinate systems for measurement are determined based on the deviation data and memorized.

[7] Thereafter, the first specimen surface geometric data is approximated with a Zernike polynomial to calculate, among coefficients of the respective terms of the Zernike polynomial, the value of the first shift amount proportionality coefficient that is variable in proportion to the shift amount of the first lens surface 91 in the perpendicular direction to the first measuring optical axis L1, and the value of the first tilt amount proportionality coefficient that is variable in proportion to the tilt amount of the first lens surface 91 with respect to the first measuring optical axis L1 (first Zernike coefficient calculation step). This process is executed by the first Zernike coefficient calculator 52A shown in Fig.3.

[8] Likewise, the second specimen surface geometric data is approximated with a Zernike polynomial, to calculate, among coefficients of the respective terms of the Zernike polynomial, the value of a second shift amount proportionality coefficient that is variable in proportion to the shift amount of the second lens surface 92 in the perpendicular direction to the second measuring optical axis L2, and the value of the second tilt amount proportionality coefficient that is variable in proportion to the tilt amount of the second lens surface 92 with respect to the second measuring optical axis L2 (second Zernike coefficient calculation step). This process is executed by the second Zernike coefficient calculator 52B shown in Fig.3.

The Zernike polynomial used in the present embodiment is a tenth-order Zernike polynomial $Z(\rho, \theta)$ expressed in the form of polar coordinates, wherein $\rho$ represents a distance from a pole, and $\theta$ a tilt angle to an initial line. The following formula (1) shows nine terms of the first to fourth orders among the total 35 terms of the tenth-order Zernike polynomial.

$$\begin{aligned} Z(\rho,\theta) = & Z_0 + Z_1\rho\cos\theta + Z_2\rho\sin\theta + Z_3\left(2\rho^2 - 1\right) \\ & + Z_4\rho^2\cos 2\theta + Z_5\rho^2\sin 2\theta \\ & + Z_6\left(3\rho^2 - 2\right)\rho\cos\theta + Z_7\left(3\rho^2 - 2\right)\rho\sin\theta \\ & + Z_8\left(6\rho^4 - 6\rho^2 + 1\right) \qquad \cdots\cdots \quad (1) \end{aligned}$$

Of the above Zernike polynomial expressed by the above formula (1), a coefficient $Z_1$ of the second term and a coefficient $Z_2$ of the third term serve as the first and second shift amount proportionality coefficients as well as the first and second tilt amount proportionality coefficients.

In other words, in the above first Zernike coefficient calculation step, the first specimen surface geometric data is approximated with the above Zernike polynomial, to determine the values of the coefficients $Z_1$ and $Z_2$ as the first shift amount proportionality coefficients and the first tilt amount proportionality coefficients.

Likewise, in the above second Zernike coefficient calculation step, the second specimen surface geometric data is approximated with the above Zernike polynomial, to determine the values of the coefficients $Z_1$ and $Z_2$ as the second shift amount proportionality coefficients and the second tilt amount proportionality coefficients.

[9] Next, on the basis of the first specimen surface geometric data obtained in the specimen surface geometric data acquiring step, the value of decentricity of the apex of the first lens surface 91 relative to the first measuring optical axis L1 (the first apex decentricity), which is variable in proportion to the shift amount of the first lens surface 91 in the perpendicular direction to the first measuring optical axis L1 and the tilt amount of the first lens surface 91 to the first measuring optical axis L1, is calculated (first apex decentricity calculation step). This process is executed by the first apex decentricity calculator 53A shown in Fig.3 through the following procedure:

(a) First, on the basis of the geometric data of the first specimen surface 91, coordinates of an apex of the first specimen surface 91, hereinafter referred to as the first apex, are determined in the first coordinate system for measurement.
(b) Next, on the basis of the determined coordinates of the first apex, a distance of the first apex from the first measuring optical axis L1 (the Z-axis of the first coordinate system) in the perpendicular direction to the first measuring optical axis L1 is calculated as the first apex decentricity value.

[10] Likewise, on the basis of the second specimen surface geometric data obtained in the specimen surface geometric data acquiring step, the value of decentricity of the apex of the second lens surface 92 relative to the second measuring optical axis L2 (the second apex decentricity), which is variable in proportion to the shift amount of the second lens surface 92 in the perpendicular direction to the second measuring optical axis L2 and the tilt amount of the second lens surface 92 to the second measuring optical axis L2, is calculated (second apex decentricity calculation step). This process is executed by the second apex decentricity calculator 53B shown in Fig.3 through the following procedure:

(a) First, on the basis of the geometric data of the second specimen surface 92, coordinates of an apex of the second specimen surface 92, hereinafter referred to as the second apex, are determined in the second coordinate system for measurement.
(b) Next, on the basis of the determined coordinates of the second apex, a distance of the second apex from the second measuring optical axis L2 (the W-axis of the second coordinate system) in the perpendicular direction to the second measuring optical axis L2 is calculated as the second apex decentricity value.

[11] Thereafter, on the basis of the values of the coefficients $Z_1$ and $Z_2$ as calculated in the first Zernike coefficient calculation step and the first apex decentricity as calculated in the first apex decentricity calculation step, the shift amount and the tilt amount of the first lens surface 91 with respect to the first measuring optical axis L1 are determined in the first coordinate system for measurement (first shift and tilt amount calculation step). This process is executed by the shift and tilt amount calculator 54A shown in Fig.3, using the following formulas (2) to (5):

$$S_x = \frac{a_{1(1-t)} \cdot C_{X(1-s,t)} - c_{tx} \cdot Z_{1(1-s,t)}}{a_{1(1-t)} \cdot c_{sx} - c_{tx} \cdot a_{1(1-s)}} \qquad \cdots\cdots \quad (2)$$

$$S_y = \frac{a_{2(1-t)} \cdot C_{Y(1-s,t)} - c_{ty} \cdot Z_{2(1-s,t)}}{a_{2(1-t)} \cdot c_{sy} - c_{ty} \cdot a_{2(1-s)}} \qquad \cdots\cdots \quad (3)$$

$$t_x = \frac{a_{1(1-s)} \cdot C_{X(1-s,t)} - c_{sx} \cdot Z_{1(1-s,t)}}{a_{1(1-s)} \cdot c_{sx} - c_{sx} \cdot a_{1(1-s)}} \qquad \cdots\cdots \quad (4)$$

$$t_y = \frac{a_{2(1-s)} \cdot C_{Y(1-s,t)} - c_{sy} \cdot Z_{2(1-s,t)}}{a_{2(1-s)} \cdot c_{sy} - c_{sy} \cdot a_{2(1-s)}} \qquad \cdots\cdots \quad (5)$$

wherein $s_x$ and $s_y$ represent shift amounts of the first lens surface 91 to the first measuring optical axis L1 in the direction of the X-axis (X direction) and in the direction of the Y-axis (Y direction) respectively, $t_x$ and $t_y$ represent tilt amounts of the first lens surface 91 to the first measuring optical axis L1 in the X direction and in the Y direction respectively, $Z_{1(1-s,t)}$ and $Z_{2(1-s,t)}$ represent the coefficients Z1 and $Z_2$ calculated in the first Zernike coefficient calculation step respectively, and $C_{X(1-s,t)}$ and $C_{Y(1-s,t)}$ represent the values of the apex decentricity of the first lens surface 91 to the first measuring optical axis L1 in the X direction and in the Y direction (X direction component and Y direction component of the first apex decentricity) respectively. Moreover, $a_{1(1-s)}$, $a_{2(1-s)}$, $a_{1(1-t)}$, $a_{2(1-t)}$, $C_{sx}$, $C_{sy}$, $C_{tx}$ and $c_{ty}$ represent proportionality coefficients respectively determined by means of computer simulation in a manner as described later.

[12] Likewise, on the basis of the values of the coefficients $Z_1$ and $Z_2$ as calculated in the second Zernike coefficient calculation step and the second apex decentricity as calculated in the second apex decentricity calculation step, the shift amount and the tilt amount of the second lens surface 92 with respect to the second measuring optical axis L2 are determined in the second coordinate system for measurement (second shift and tilt amount calculation step). This process is executed by the shift and tilt amount calculator 54B shown in Fig. 3, using the following formulas (6) to (9):

$$S_u = \frac{a_{1(2-t)} \cdot C_{U(2-s,t)} - c_{tu} \cdot Z_{1(2-s,t)}}{a_{1(2-t)} \cdot c_{su} - c_{tu} \cdot a_{1(2-s)}} \qquad \cdots\cdots \quad (6)$$

$$S_v = \frac{a_{2(2-t)} \cdot C_{V(2-s,t)} - c_{tv} \cdot Z_{2(2-s,t)}}{a_{2(2-t)} \cdot c_{sv} - c_{tv} \cdot a_{2(2-s)}} \qquad \cdots\cdots \quad (7)$$

$$t_u = \frac{a_{1(2-s)} \cdot C_{U(2-s,t)} - c_{su} \cdot Z_{1(2-s,t)}}{a_{1(2-s)} \cdot c_{su} - c_{su} \cdot a_{1(2-s)}} \qquad \cdots\cdots \quad (8)$$

$$t_v = \frac{a_{2(2-s)} \cdot C_{V(2-s,t)} - c_{sv} \cdot Z_{2(2-s,t)}}{a_{2(2-s)} \cdot c_{sv} - c_{sv} \cdot a_{2(2-s)}} \qquad \cdots\cdots \quad (9)$$

wherein $s_u$ and $s_v$ represent shift amounts of the second lens surface 92 to the second measuring optical axis L2 in the direction of the U-axis (U direction) and in the direction of the V-axis (V direction) respectively, $t_u$ and $t_v$

represent tilt amounts of the second lens surface 92 to the second measuring optical axis L2 in the X direction and in the Y direction respectively, $Z_{1(2-s,t)}$ and $Z_{2(2-s,t)}$ represent the coefficients Z1 and Z2 calculated in the second Zernike coefficient calculation step respectively, and $C_{U(2-s,t)}$ and $C_{V(2-s,t)}$ represent the values of the apex decentricity of the second lens surface 92 to the second measuring optical axis L2 in the U direction and in the V direction (U direction component and V direction component of the second apex decentricity) respectively. Moreover, $a_{1(2-s)}$, $a_{2(2-s)}$, $a_{1(2-t)}$, $a_{2(2-t)}$, $c_{su}$, $c_{sv}$, $c_{tu}$ and $c_{tv}$ represent proportionality coefficients respectively determined by means of computer simulation in a manner as described later.

[13] Next, on the basis of the shift amounts $s_x$ and $s_y$ and the tilt amounts $t_x$ and $t_y$ of the first lens surface 91 as calculated by the first shift and tilt amount calculation step, the shift amounts $s_u$ and $s_v$ and the tilt amounts $t_u$ and $t_v$ of the second lens surface 92 as calculated by the second shift and tilt amount calculation step, and the relative positions of the first and second interferometers 1A and 1B (the positional relationship between the first and second coordinate systems for measurement) as detected in the above procedure [1], the amounts of the decentration and the tilt of the lens surfaces 91 and 92 relative to each other are calculated (misalignment calculation step). This process is executed by the misalignment calculator 55 shown in Fig.3 through the following procedure:

(a) First, if the second coordinate system for measurement has a deviation relative to the first coordinate system for measurement because of an influence of the actual relative positional relationship between the first interferometer 1A and the second interferometer 1B, the position of the second coordinate system for measurement is corrected so that the W-axis will get on the same line in the same direction as the Z-axis of the first coordinate system, and the U- and V-axes will get parallel to and oriented in the same direction as the X- and Y-axes of the first coordinate system for measurement respectively.

(b) Next, the shift amounts $s_u$ and $s_v$ and the tilt amounts $t_u$ and $t_v$ as detected in the uncorrected second coordinate system for measurement are corrected to be shift amounts $s_u'$ and $s_v'$ and tilt amounts $t_u'$ and $t_v'$ in the corrected second coordinate system for measurement.

(c) Then, differences ($s_x - s_u'$, $s_y - s_v'$) between the shift amounts $s_x$ and $s_y$ in the first coordinate system for measurement and the shift amounts $s_u'$ and $s_v'$ in the corrected second coordinate system for measurement are calculated as the amounts of decentration between the first lens surface 91 and the second lens surface 92 in the X and Y directions respectively.

(d) Likewise, differences ($t_x - t_u'$, $t_y - t_v'$) between the tilt amounts $t_x$ and $t_y$ in the first coordinate system for measurement and the tilt amounts $t_u'$ and $t_v'$ in the corrected second coordinate system for measurement are calculated as the amounts of tilt between the first lens surface 91 and the second lens surface 92 in the X and Y directions respectively.

Now the above-mentioned computer simulation will be discussed while showing examples of specified numerical values.

In a first stage of the computer simulation, a simulated first lens surface corresponding to the first lens surface 91 and a simulated second lens surface corresponding to the second lens surface 92 are provided on a computer on the basis of design data of the first and second lens surfaces 91 and 92. In the present embodiment, aspheric coefficients of the simulated first and second lens surfaces have values as shown in Table 1, provided that an aspheric surface may be expressed by the following formula (10) :

TABLE 1

|  | Simulated first lens surface | Simulated second lens surface |
|---|---|---|
| C | 0.5 | -0.095 |
| K | 2.5 | -10 |
| $B_4$ | -0.02 | -0.07 |
| $B_6$ | 0.007 | 0.006 |
| $B_8$ | -0.02 | 0.002 |
| $B_{10}$ | 0.008 | 0.001 |

$$Z = \frac{Y^2 C}{1 + \sqrt{1 - KY^2 C^2}} + \sum_{i=2}^{5} B_{2i} Y^{2i} \quad \cdots \cdots \quad (10)$$

wherein

Z: length of a vertical line that extends from a point on an aspheric surface, the point being at a height Y from an optical axis, down to a contact plane (a plane vertical to the optical axis) that is in contact with an apex of the aspheric surface;

Y: height from the optical axis;

K: conic constant (eccentricity)

C: curvature in the vicinity of the optical axis

$B_{2i}$: $2_i$th-order coefficient

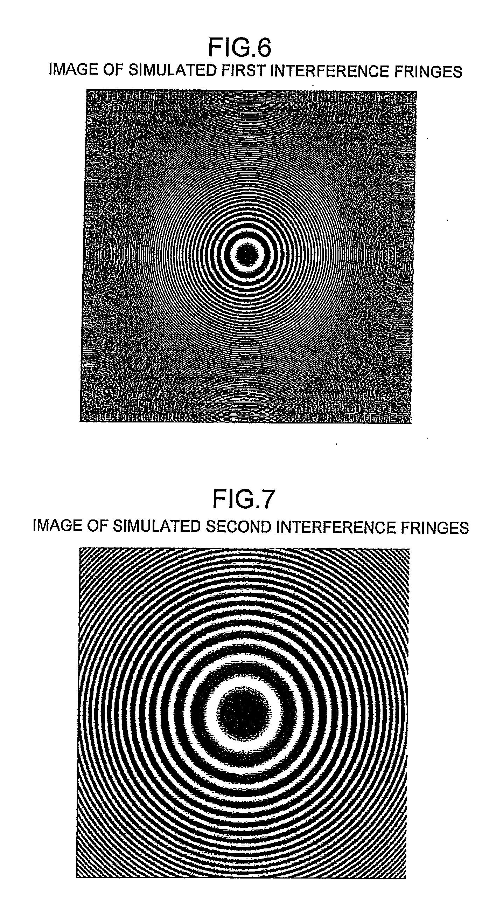

Then, images of simulated first and second interference fringes (see Figs. 6 and 7) are produced corresponding to the above images of the first and second interference fringes respectively, which will be obtained when the simulated first and second lens surfaces are subjected to the optical interference measurement using the first and second interferometers 1A and 1B. Depending upon the density of the produced interference fringes, an appropriate masking device is set to limit the range of the interference fringes to be served for the analysis.

Thereafter, while tilting the simulated first and second lens surfaces gradually by a degree of one minute each, the simulated first and second interference fringe images are produced at each tilt amount. The simulated first and second interference fringe images detected at each grade of tilt amount are analyzed to obtain geometric data of the simulated first and second lens surfaces at each tilt grade. Then, the respective values of the coefficients $Z_1$ and $Z_2$ of the Zernike polynomial approximating the obtained geometric data are determined, and the respective values of the apex decentricity of the simulated first and second lens surfaces are determined. Note that the simulated first lens surface should be tilted pivotally about its center point (an intersection of the simulated first lens surface with its rotational axis). Likewise, the simulated second lens surface should be tilted pivotally about its center point (an intersection of the simulated second lens surface with its rotational axis).

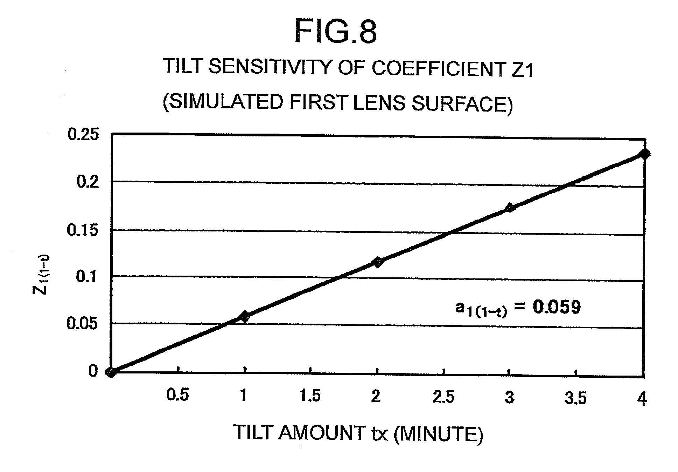

Fig.8 shows a relationship between the tilt amount $t_x$ of the simulated first lens surface (x implies that the tilt amount is in the direction of the X axis of the first coordinate system for measurement) and the value $Z_{1(1-t)}$ of the coefficient $Z_1$ at the tilt amount $t_x$ (the value $Z_{1(1-t)}$ being amended to be zero when the tilt amount $t_x$ is zero). As shown in Fig. 8, there is a proportional relationship as expressed by the following formula (11) between the values $Z_{1(1-t)}$ and $t_x$, wherein the proportionality coefficient $a_{1(1-t)}$ was determined to be 0.059:

$$Z_{1(1-t)} = a_{1(1-t)} \cdot t_x \qquad \cdots\cdots \qquad (11)$$

Although it is not shown in the drawings, the tilt amount $t_y$ of the simulated first lens surface (y implies that the tilt amount is in the direction of the Y axis of the first coordinate system for measurement) and the value $Z_{2(1-t)}$ of the coefficient $Z_2$ at the tilt amount $t_y$ (the value $Z_{2(1-t)}$ being amended to be zero when the tilt amount $t_y$ is zero) have a proportional relationship as expressed by the following formula (12), wherein the proportionality coefficient $a_{2(1-t)}$ was determined to be 0.059 that is equal to the above proportionality coefficient $a_{1(1-t)}$ because the simulated first lens surface is rotationally symmetrical:

$$Z_{2(1-t)} = a_{2(1-t)} \cdot t_y \qquad \cdots\cdots \qquad (12)$$

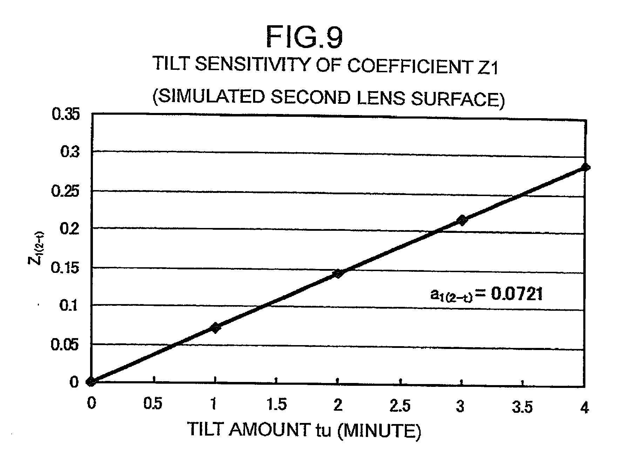

On the other hand, Fig.9 a relationship between the tilt amount $t_u$ of the simulated second lens surface (u implies that the tilt amount is in the direction of the U axis of the second coordinate system for measurement) and the value $Z_{1(2-t)}$ of the coefficient $Z_1$ at the tilt amount $t_u$ (the value $Z_{1(2-t)}$ being amended to be zero when the tilt amount $t_u$ is zero). As shown in Fig.8, there is a proportional relationship as expressed by the following formula (13) between the values $Z_{1(2-t)}$ and $t_u$, wherein the proportionality coefficient $a_{1(2-t)}$ was determined to be 0.0721:

$$Z_{1(2-t)} = a_{1(2-t)} \cdot t_u \qquad \cdots\cdots \qquad (13)$$

Although it is not shown in the drawings, the tilt amount $t_v$ of the simulated second lens surface (v implies that the tilt amount is in the direction of the V axis of the second coordinate system for measurement) and the value $Z_{2(2-t)}$ of the coefficient $Z_2$ at the tilt amount $t_v$ (the value $Z_{2(2-t)}$ being amended to be zero when the tilt amount $t_v$ is zero) also have a proportional relationship as expressed by the following formula (14), wherein the proportionality coefficient $a_{2(2-t)}$ was determined to be 0.0721 that is equal to the above proportionality coefficient $a_{1(2-t)}$ because the simulated second lens surface is rotationally symmetrical:

$$Z_{2(2-t)} = a_{2(2-t)} \cdot t_v \qquad \cdots\cdots \qquad (14)$$

Next, while shifting the simulated first and second lens surfaces gradually by a degree of one micrometer (1 μm), the simulated first and second interference fringe images are produced at each shift amount (the shift amount being set to be zero). The simulated first and second interference fringe images detected at each grade of shift amount are analyzed to obtain geometric data of the simulated first and second lens surfaces at each shift grade. Then, the respective values of the coefficients $Z_1$ and $Z_2$ of the Zernike polynomial approximating the obtained geometric data are determined.

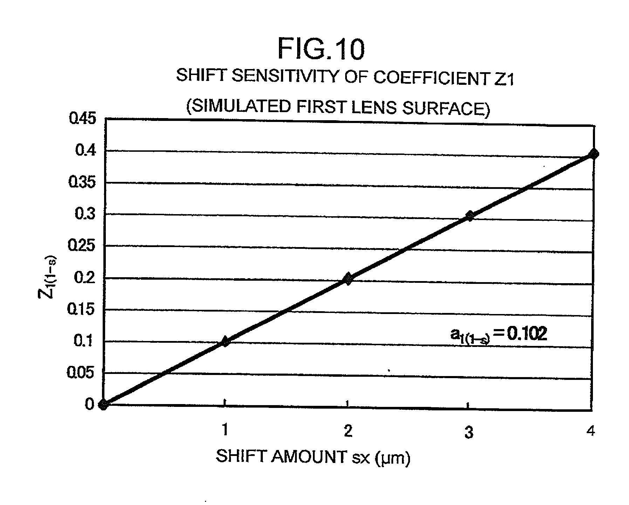

Fig. 10 shows a relationship between the shift amount $s_x$ of the simulated first lens surface (x implies that the shift amount is in the direction of the X axis of the first coordinate system for measurement) and the value $Z_{1(1-s)}$ of the coefficient $Z_1$ at the shift amount $s_x$ (the value $Z_{1(1-s)}$ being amended to be zero when the shift amount $s_x$ is zero). As shown in Fig.10, there is a proportional relationship as expressed by the following formula (15) between the values $Z_{1(1-s)}$ and $s_x$, wherein the proportionality coefficient $a_{1(1-s)}$ was determined to be 0.102:

$$Z_{1(1-s)} = a_{1(1-s)} \cdot s_x \qquad \cdots\cdots \qquad (15)$$

Although it is not shown in the drawings, the shift amount $s_y$ of the simulated first lens surface (y implies that the shift amount is in the direction of the Y axis of the first coordinate system for measurement) and the value $Z_{2(1-s)}$ of the coefficient $Z_2$ at the shift amount $s_y$ (the value $Z_{2(1-s)}$ being amended to be zero when the shift amount $s_y$ is zero) also have a proportional relationship as expressed by the following formula (16), wherein the proportionality coefficient $a_{2(1-t)}$ was determined to be 0.102 that is equal to the above proportionality coefficient $a_{1(1-s)}$ because the simulated first lens surface is rotationally symmetrical:

$$Z_{2(1-s)} = a_{2(1-s)} \cdot s_y \qquad \cdots\cdots \qquad (16)$$

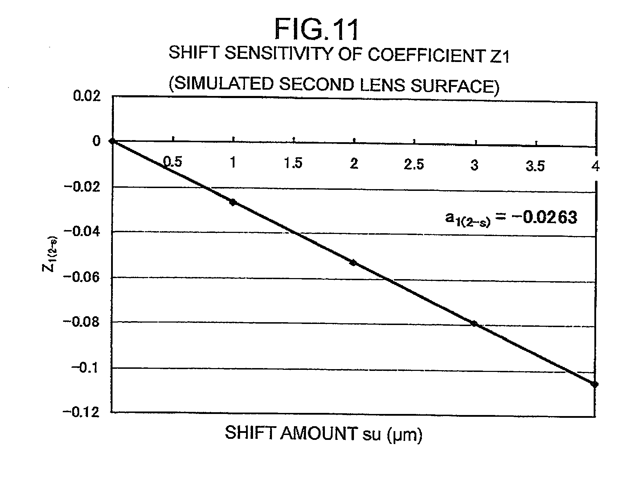

On the other hand, Fig. 11 a relationship between the shift amount $s_u$ of the simulated second lens surface (u implies that the tilt amount is in the direction of the U axis of the second coordinate system for measurement) and the value $Z_{1(2-s)}$ of the coefficient $Z_1$ at the shift amount $s_u$ (the value $Z_{1(2-s)}$ being amended to be zero when the shift amount $s_u$ is zero). As shown in Fig.11, there is a proportional relationship as expressed by the following formula (17) between the values $Z_{1(2-s)}$ and $s_u$, wherein the proportionality coefficient $a_{1(2-s)}$ was determined to be -0.0263:

$$Z_{1(2-s)} = a_{1(2-s)} \cdot s_u \qquad \cdots\cdots \qquad (17)$$

Although it is not shown in the drawings, the shift amount $s_v$ of the simulated second lens surface (v implies that the tilt amount is in the direction of the V axis of the second coordinate system for measurement) and the value $Z_{2(2-1)}$ of the coefficient $Z_2$ at the shift amount $s_v$ (the value $Z_{2(2-s)}$ being amended to be zero when the shift amount $s_v$ is zero) have a proportional relationship as expressed by the following formula (18), wherein the proportionality coefficient $a_{2(2-s)}$ was determined to be -0.0263 that is equal to the above proportionality coefficient $a_{1(2-s)}$ because the simulated second lens surface is rotationally symmetrical:

$$Z_{2(2-s)} = a_{2(2-s)} \cdot s_v \qquad \cdots\cdots \qquad (18)$$

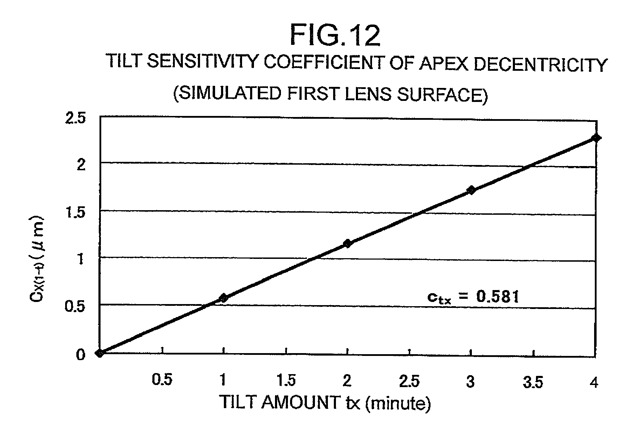

Referring to Fig.12, a relationship between the tilt amount $t_x$ given to the simulated first lens surface and the value $C_{X(1-t)}$ of the apex decentricity of the simulated first lens surface at the tilt amount $t_x$, wherein X indicates that the value represents the apex decentricity in the X axis direction of the first coordinate system for measurement). As shown in Fig.12, there is a proportional relationship as expressed by the following formula (19) between the values $C_{X(1-t)}$ and $t_x$, wherein the proportionality coefficient $c_{tx}$ was determined to be 0.5813. The proportionality coefficient $c_{tx}$ will be a positive value because the central area of the simulated first lens surface is concave:

$$C_{X(1-t)} = c_{tx} \cdot t_x \quad \cdots \cdots \quad (19)$$

Although it is not shown in the drawings, the tilt amount $t_y$ of the simulated first lens surface and the value $C_{Y(1-t)}$ of the apex decentricity of the simulated first lens surface at the tilt amount $t_y$ (Y indicating that the value represents the apex decentricity in the Y axis direction of the first coordinate system for measurement) also have a proportional relationship as expressed by the following formula (20), wherein the proportionality coefficient $c_{ty}$ was determined to be 0.5813 that is equal to the above proportionality coefficient $c_{tx}$ because the simulated first lens surface is rotationally symmetrical:

$$C_{Y(1-t)} = c_{ty} \cdot t_y \quad \cdots \cdots \quad (20)$$

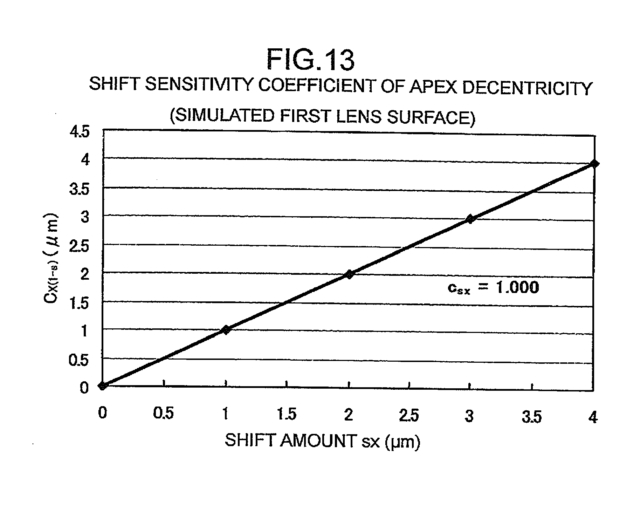

Likewise, Fig.13 shows a relationship between the shift amount $s_x$ given to the simulated first lens surface and the value $C_{X(1-s)}$ of the apex decentricity of the simulated first lens surface. As shown in Fig.13, there is a proportional relationship as expressed by the following formula (21) between the values $C_{X(1-s)}$ and $s_x$, wherein the proportionality coefficient $c_{sx}$ was determined to be 1.000:

$$C_{X(1-s)} = c_{sx} \cdot s_x \quad \cdots \cdots \quad (21)$$

Although it is not shown in the drawings, the shift amount $s_y$ of the simulated first lens surface and the value $C_{Y(1-s)}$ of the apex decentricity of the simulated first lens surface at the shift amount $s_y$ also have a proportional relationship as expressed by the following formula (22), wherein the proportionality coefficient $c_{sy}$ was determined to be 1.000:

$$C_{Y(1-s)} = c_{sy} \cdot s_y \quad \cdots \cdots \quad (22)$$

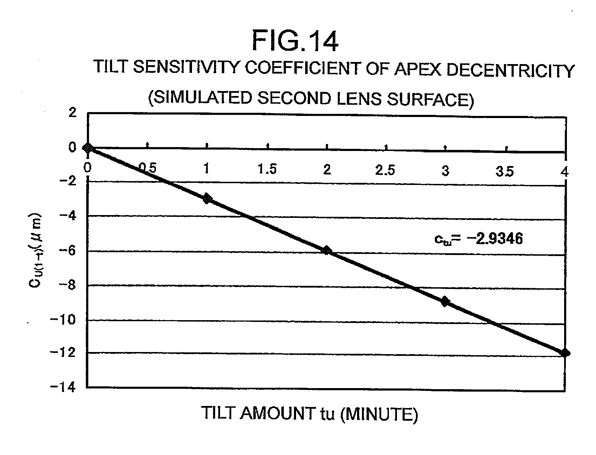

On the other hand, Fig. 14 shows a relationship between the tilt amount $t_u$ given to the simulated second lens surface and the value $C_{U(1-t)}$ of the apex decentricity of the simulated second lens surface at the tilt amount $t_u$, wherein U indicates that the value represents the apex decentricity in the U axis direction of the second coordinate system for measurement). As shown in Fig.12, there is a proportional relationship as expressed by the following formula (23) between the values $C_{U(1-t)}$ and $t_u$, wherein the proportionality coefficient $c_{tu}$ was determined to be -2.9346. The proportionality coefficient $c_{tu}$ will be a negative value because the central area of the simulated second lens surface is convex:

$$C_{U(1-t)} = c_{tu} \cdot t_u \quad \cdots \cdots \quad (23)$$

Although it is not shown in the drawings, the tilt amount $t_v$ of the simulated second lens surface and the value $C_{V(1-t)}$ of the apex decentricity of the simulated second lens surface at the tilt amount $t_v$ (V indicating that the value represents the apex decentricity in the the V axis direction of the second coordinate system for measurement) also have a proportional relationship as expressed by the following formula (24), wherein the proportionality coefficient $c_{tv}$ was determined to be -2.9346 that is equal to the above proportionality coefficient $c_{tu}$ because the simulated second lens surface is rotationally symmetrical:

$$C_{V(1-t)} = c_{tv} \cdot t_v \quad \cdots \cdots \quad (24)$$

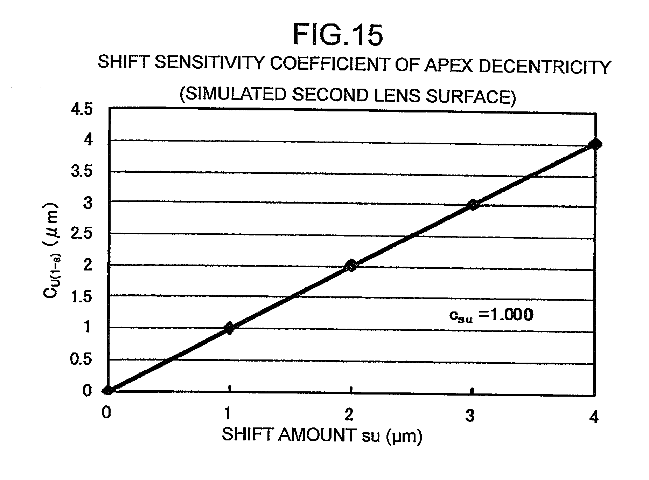

Likewise, Fig.15 shows a relationship between the shift amount $s_u$ given to the simulated second lens surface and the value $C_{U(1-s)}$ of the apex decentricity of the simulated second lens surface. As shown in Fig. 13, there is a proportional relationship as expressed by the following formula (25) between the values $C_{U(1-s)}$ and $s_u$, wherein the proportionality coefficient $c_{su}$ was determined to be 1.000:

$$C_{U(1-s)} = c_{su} \cdot s_u \quad \cdots \cdots \quad (25)$$

Although it is not shown in the drawings, the shift amount $s_v$ of the simulated second lens surface and the value

$C_{V(1-s)}$ of the apex decentricity of the simulated second lens surface at the shift amount $s_v$ also have a proportional relationship as expressed by the following formula (26), wherein the proportionality coefficient $c_{sv}$ was determined to be 1.000:

$$C_{V(1-s)} = c_{sv} \cdot s_v \quad \cdots\cdots \quad (26)$$

Moreover, it has been confirmed that the value $Z_{1(1-s, t)}$ of the coefficient $Z_1$ while the tilt amount $t_x$ and the shift amount $s_x$ being given to the simulated first lens surface at the same time has a relationship with respect to the above-mentioned values $Z_{1(1-s)}$ and $Z_{1(1-t)}$ that can be expressed by the following formula (27), and that the value $Z_{2(1-s, t)}$ of the coefficient $Z_2$ while the tilt amount $t_y$ and the shift amount $s_y$ being given to the simulated second lens surface has a relationship with respect to the above-mentioned values $Z_{2(1-s)}$ and $Z_{2(1-t)}$ that can be expressed by the following formula (28):

$$Z_{1(1-s, t)} = Z_{1(1-s)} + Z_{1(1-t)} \quad \cdots\cdots \quad (27)$$

$$Z_{2(1-s, t)} = Z_{2(1-s)} + Z_{2(1-t)} \quad \cdots\cdots \quad (28)$$

Likewise, it has been confirmed that the value $Z_{1(2-s, t)}$ of the coefficient $Z_1$ while the tilt amount $t_u$ and the shift amount $s_u$ being given to the simulated second lens surface at the same time has a relationship with respect to the above-mentioned values $Z_{1(2-s)}$ and $Z_{1(2-t)}$ that can be expressed by the following formula (29), and that the value $Z_{2(2-s, t)}$ of the coefficient $Z_2$ while the tilt amount $t_v$ and the shift amount $s_v$ being given to the simulated second lens surface has a relationship with respect to the above-mentioned values $Z_{2(2-s)}$ and $Z_{2(2-t)}$ that can be expressed by the following formula (30):

$$Z_{1(2-s, t)} = Z_{1(2-s)} + Z_{1(2-t)} \quad \cdots\cdots \quad (29)$$

$$Z_{2(2-s, t)} = Z_{2(2-s)} + Z_{2(2-t)} \quad \cdots\cdots \quad (30)$$

Furthermore, it has been confirmed that the value $C_{X(1-s, t)}$ of the apex decentricity of the simulated first lens surface, which is measured when the tilt amount $t_x$ and the shift amount $s_x$ are given to the simulated first lens surface at the same time, has a relationship expressed by the following formula (31) with respect to the above-mentioned values $C_{X(1-t)}$ and $C_{X(1-s)}$, and that the value $C_{Y(1-s, t)}$ of the apex decentricity of the simulated first lens surface while the tilt amount $t_y$ and the shift amount $s_y$ being simultaneously given to the simulated first lens surface has a relationship with the above-mentioned values $C_{Y(1-t)}$ and $C_{Y(1-s)}$, which can be expressed by the following formula (32):

$$C_{X(1-s, t)} = C_{X(1-s)} + C_{X(1-t)} \quad \cdots\cdots \quad (31)$$

$$C_{Y(1-s, t)} = C_{Y(1-s)} + C_{Y(1-t)} \quad \cdots\cdots \quad (32)$$

Likewise, it has been conformed that the value $C_{U(1-s, t)}$ of the apex decentricity of the simulated second lens surface, which is measured when the tilt amount $t_u$ and the shift amount $s_u$ are given to the simulated second lens surface at the same time, has a relationship expressed by the following formula (33) with respect to the above-mentioned values $C_{U(1-t)}$ and $C_{U(1-s)}$, and that the value $C_{V(1-s, t)}$ of the apex decentricity of the simulated second lens surface while the tilt amount $t_v$ and the shift amount $s_v$ being simultaneously given to the simulated second lens surface has a relationship with the above-mentioned values $C_{V(1-t)}$ and $C_{V(1-s)}$, which can be expressed by the following formula (34):

$$C_{U(1-s, t)} = C_{U(1-s)} + C_{U(1-t)} \quad \cdots\cdots \quad (33)$$

$$C_{V(1-s,t)} = C_{V(1-s)} + C_{V(1-t)} \quad \cdots\cdots \quad (34)$$

From the respective formulas obtained through this computer simulation, the above-mentioned formulas (2) to (9) may be derived.

Now results of the computer simulation with regard to measurement errors (calculation errors) will be discussed in the case the present invention is applied to.

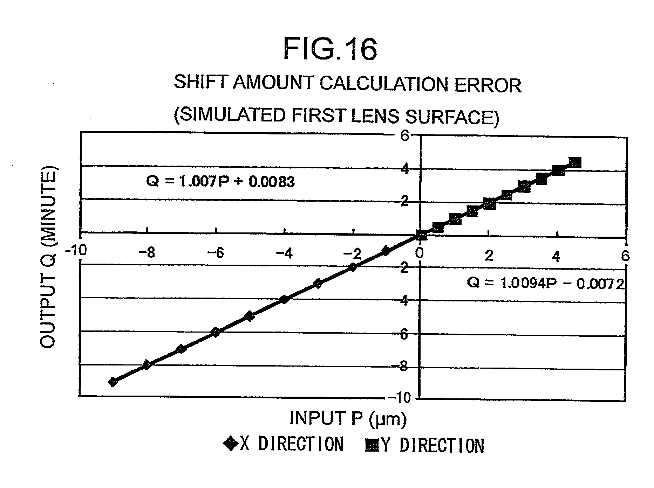

Fig.16 shows results of measurements of shift amounts measured according to the present invention while shifting the simulated first lens surface in the X and Y directions stepwise by respectively predetermined amounts (by 1 μm in the X direction, and 0.5 μm in the Y direction). In Fig.16, the horizontal line indicates the input shift amount P, and the vertical line indicates the output shift amount Q that is calculated according to the measuring method of the present invention. In order to show the results in the X and Y directions at once, the results in the X direction are shown in a negative area of the graph, while the results in the Y direction are shown in a positive area of the graph. Linear equations written in the graph approximate the relationship between the input P and the output Q. Without any measurement errors, the output Q will be equal to the input P. As seen from the linear equations, the measurement errors in the method of the present invention were about 0.9%, verifying the high accuracy of the method of the present invention.

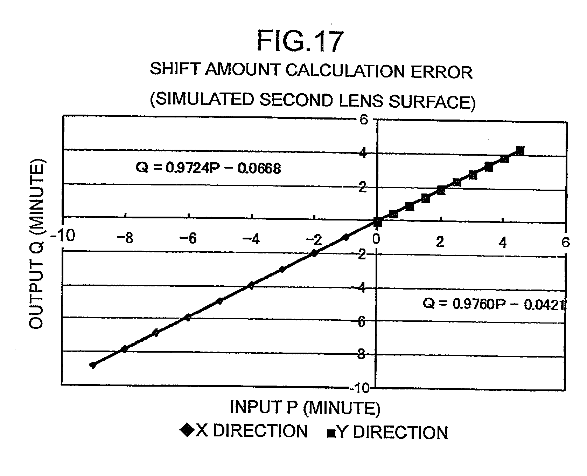

Fig.17 shows results of measurements of shift amounts measured according to the present invention while shifting the simulated second lens surface in the U and V directions stepwise by respectively predetermined amounts (by 1 μm in the U direction, and 0.5μm in the V direction). In Fig.17, the horizontal line indicates the input shift amount P, and the vertical line indicates the output shift amount Q that is calculated according to the measuring method of the present invention. In order to show the results in the U and V directions at once, the results in the U direction are shown in a negative area of the graph, while the results in the V direction are shown in a positive area of the graph. Linear equations written in the graph approximate the relationship between the input P and the output Q. Without any measurement errors, the output Q will be equal to the input P. As seen from the linear equations, the measurement errors in the method of the present invention were about 2.8%, verifying the high accuracy of the method of the present invention.

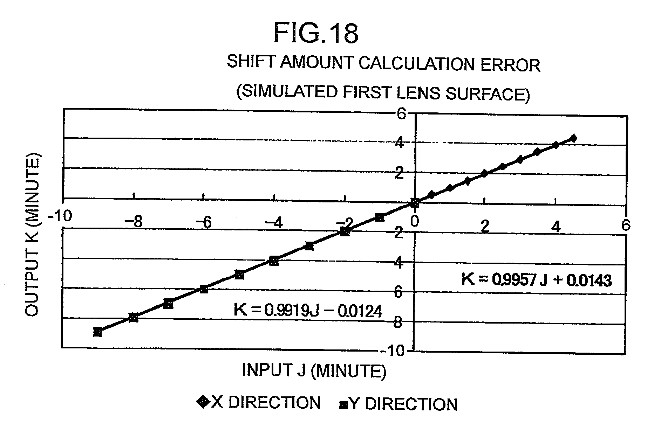

Fig. 18 shows results of measurements of tilt amounts measured according to the present invention while tilting the simulated first lens surface in the X and Y directions stepwise by respectively predetermined amounts (by 0.5 minutes in the X direction, and 1 minute in the Y direction). In Fig.18, the horizontal line indicates the input tilt amount J, and the vertical line indicates the output tilt amount K that is calculated according to the measuring method of the present invention. In order to show the results in the X and Y directions at once, the results in the X direction are shown in a positive area of the graph, while the results in the Y direction are shown in a negative area of the graph. Linear equations written in the graph approximate the relationship between the input J and the output K. Without any measurement errors, the output K will be equal to the input J. As seen from the linear equations, the measurement errors in the method of the present invention were about 0.8%, verifying the high accuracy of the method of the present invention.

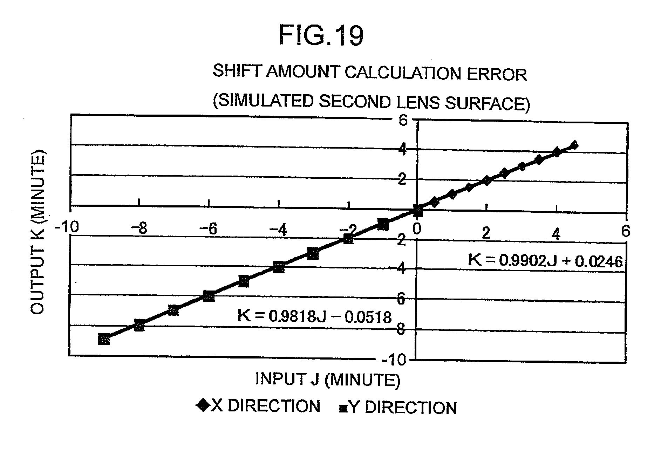

Fig. 19 shows results of measurements of tilt amounts measured according to the present invention while tilting the simulated second lens surface in the U and V directions stepwise by respectively predetermined amounts (by 0.5 minutes in the U direction, and 1 minute in the V direction). In Fig.19, the horizontal line indicates the input tilt amount J, and the vertical line indicates the output tilt amount K that is calculated according to the measuring method of the present invention. In order to show the results in the U and V directions at once, the results in the U direction are shown in a positive area of the graph, while the results in the V direction are shown in a negative area of the graph. Linear equations written in the graph approximate the relationship between the input J and the output K. Without any measurement errors, the output K will be equal to the input J. As seen from the linear equations, the measurement errors in the method of the present invention were about 1.9%, verifying the high accuracy of the method of the present invention.

The present invention has been described so far in relation to one embodiment. It should be understood that the present invention is not to be limited to the above embodiment, but may be modified in many aspects.

For example, the present invention is applicable to such a lens having an aspheric surface and a spherical surface, although the first and second lens surfaces 91 and 92 are both rotationally symmetric aspheric surfaces in the above embodiment. When the second lens surface 92 is spherical, only the shift amount will be measured with respect to the second measuring optical axis L2, but no tilt amount will be provided for the spherical surface. Therefore, as for the spherical surface, the above-described tilt amount calculation step should be carried out on the assumption that the tilt amount is zero. It should be noted that the relationship between the first and second lens surfaces 91 and 92 is relative, so that it is possible to regard the first lens surface 91 as the second specimen surface and the second lens surface 92 as the first specimen surface. Namely, the present invention is applicable to a case where the second lens surface 92 is a rotationally symmetric aspheric surface and the first lens surface 91 is spherical.

In the above embodiment, the first measuring beam projected from the first interferometer 1A onto the first lens surface 91 and the second measuring beam projected from the second interferometer 1B onto the second lens surface 92 are spherical waves. However, the objective lenses 18A and 18B may be omitted to serve the parallel beam (plane waves) as the first and second measuring beams.

Moreover, microscopic interferometers using Mireau type objective optics or Michelson type objective optics may be used as the first and second interferometers. This embodiment is preferable when the aspheric lens to inspect is small.

Although the embodiment described with reference to the drawings refers to the aspheric lens as the aspheric object or the specimen, the present invention may be used to measure an aspheric mirror that has a rotationally symmetric aspheric first mirror surface and a rotationally symmetric aspheric or spherical second mirror surface. In that case, the reflectance of the mirror surfaces may be high. Accordingly, it is desirable to adjust the reflectance and the transmittance of the reference standard flat surfaces 15Aa and 15Ba to the reflectance of the first and second mirror surfaces. For example, if the reflectance of the mirror surface is 100%, the reflectance of the reference standard flat surface 15Aa or 15Ba may preferably be set to be around 50%, i.e. the transmittance around 50%.

**Claims**

1. A method of measuring decentration and tilt of a first specimen surface (91) of an aspheric object (9) relative to a second specimen surface (92) of said aspheric object using first and second interferometers (1A, 1B), wherein said first specimen surface is a rotationally symmetric aspheric surface and said second specimen surface is a rotationally symmetric aspheric surface or a spherical surface, and relative positions of said first and second interferometers to each other are determined, the method comprising the steps of:

   projecting a first measuring beam onto said first specimen surface along a first measuring optical axis (L1) of said first interferometer, to capture image data of first interference fringes that are produced by optical interference between a first reflection wave front of said first measuring beam as reflected from said first specimen surface and a first reference wave front of said first interferometer;
   projecting a second measuring beam onto said second specimen surface along a second measuring optical axis (L2) of said second interferometer, to capture image data of second interference fringes that are produced by optical interference between a second reflection wave front of said second measuring beam as reflected from said second specimen surface and a second reference wave front of said second interferometer;
   analyzing the image data of said first interference fringes to acquire geometric data of said first specimen surface;
   analyzing the image data of said second interference fringes to acquire geometric data of said second specimen surface;
   approximating said geometric data of said first specimen surface with a Zernike polynomial to calculate, among coefficients of respective terms of the Zernike polynomial, a value of a first shift amount proportionality coefficient that is variable in proportion to a shift amount of said first specimen surface in a perpendicular direction to said first measuring optical axis and a value of a first tilt amount proportionality coefficient that is variable in proportion to a tilt amount of said first specimen surface to said first measuring optical axis;
   approximating said geometric data of said second specimen surface with a Zernike polynomial to calculate, among coefficients of respective terms of the Zernike polynomial, a value of a second shift amount proportionality coefficient that is variable in proportion to a shift amount of said second specimen surface in a perpendicular direction to said second measuring optical axis and a value of a second tilt amount proportionality coefficient that is variable in proportion to a tilt amount of said second specimen surface to said second measuring optical axis;
   calculating a value of decentricity of an apex of said first specimen surface to said first measuring optical axis on the basis of said geometric data of said first specimen surface, the value of apex decentricity varying with the shift amount of said first specimen surface in the perpendicular direction to said first measuring optical axis and the tilt amount of said first specimen surface to said first measuring optical axis;
   calculating a value of decentricity of an apex of said second specimen surface to said second measuring optical axis on the basis of said geometric data of said second specimen surface, the value of apex decentricity varying with the shift amount of said second specimen surface in the perpendicular direction to said second measuring optical axis and the tilt amount of said second specimen surface to said second measuring optical axis;
   calculating a shift amount ($s_x$, $s_y$) and a tilt amount ($t_x$, $t_y$) of said first specimen surface to said first measuring optical axis on the basis of the values of said first shift amount proportionality coefficient, said first tilt amount proportionality coefficient and said apex decentricity of said first specimen surface;
   calculating a shift amount ($s_u$, $s_v$) and a tilt amount ($t_u$, $t_v$) of said second specimen surface to said second measuring optical axis on the basis of the values of said second shift amount proportionality coefficient, said second tilt amount proportionality coefficient and said apex decentricity of said second specimen surface; and
   calculating amounts of the relative decentration and tilt of said first specimen surface to said second specimen surface on the basis of the shift amount and the tilt amount of said first specimen surface, the shift amount and the tilt amount of said second specimen surface, and information on the relative positions of said first and second interferometers.

2. The method as claimed in claim 1, wherein said Zernike polynomial is a Zernike polynomial $Z(\rho, \theta)$ of the fourth or higher order that is expressed in the form of polar coordinates, $\rho$ and $\theta$ representing a distance from a pole and a tilt angle to an initial line respectively, and wherein said first shift amount proportionality coefficient and said second shift amount proportionality coefficient are a coefficient $Z_1$ of a term expressed by the following formula (1) and a coefficient $Z_2$ of a term expressed by the following formula (2):

$$\rho \cos \theta \quad \cdots\cdots \quad (1)$$

$$\rho \sin \theta \quad \cdots\cdots \quad (2)$$

3. An apparatus for measuring decentration and tilt of a first specimen surface (91) of an aspheric object (9) relative to a second specimen surface (92) of said aspheric obj ect, wherein said first specimen surface is a rotationally symmetric aspheric surface and said second specimen surface is a rotationally symmetric aspheric surface or a spherical surface, said apparatus comprising:

a first interferometer (1A) configured to project a first measuring beam onto said first specimen surface along a first measuring optical axis (L1), to capture image data of first interference fringes that are produced by optical interference between a first reflection wave front of said first measuring beam as reflected from said first specimen surface and a first reference wave front of said first interferometer;

a second interferometer (1B) configured to project a second measuring beam onto said second specimen surface along a second measuring optical axis (L2), to capture image data of second interference fringes that are produced by optical interference between a second reflection wave front of said second measuring beam as reflected from said second specimen surface and a second reference wave front of said second interferometer, wherein the position of said second interferometer relative to said first interferometer is determined;

a first specimen surface geometric data acquiring device (51A) configured to analyze the image data of said first interference fringes to acquire geometric data of said first specimen surface;

a second specimen surface geometric data acquiring device (51B) configured to analyze the image data of said second interference fringes to acquire geometric data of said second specimen surface;

a first Zernike coefficient calculator (52A) configured to approximate said geometric data of said first specimen surface with a Zernike polynomial to calculate, among coefficients of respective terms of the Zernike polynomial, a value of a first shift amount proportionality coefficient that is variable in proportion to a shift amount of said first specimen surface in a perpendicular direction to said first measuring optical axis and a value of a first tilt amount proportionality coefficient that is variable in proportion to a tilt amount of said first specimen surface to said first measuring optical axis;

a second Zernike coefficient calculator (52B) configured to approximate said geometric data of said second specimen surface with Zernike polynomial to calculate, among coefficients of respective terms of the Zernike polynomial, a value of a second shift amount proportionality coefficient that is variable in proportion to a shift amount of said second specimen surface in a perpendicular direction to said second measuring optical axis and a value of a second tilt amount proportionality coefficient that is variable in proportion to a tilt amount of said second specimen surface to said second measuring optical axis;

a first apex decentricity calculator (53A) configured to calculate a value of decentricity of an apex of said first specimen surface to said first measuring optical axis on the basis of said geometric data of said first specimen surface, the value of apex decentricity varying with the shift amount of said first specimen surface in the perpendicular direction to said first measuring optical axis and the tilt amount of said first specimen surface to said first measuring optical axis;

a second apex decentricity calculator (53B) configured to calculate a value of decentricity of an apex of said second specimen surface to said second measuring optical axis on the basis of said geometric data of said second specimen surface, the value of apex decentricity varying with the shift amount of said second specimen surface in the perpendicular direction to said second measuring optical axis and the tilt amount of said second specimen surface to said second measuring optical axis;

a first shift and tilt amount calculator (54A) configured to calculate a shift amount and a tilt amount of said first specimen surface to said first measuring optical axis on the basis of the values of said first shift amount proportionality coefficient, said first tilt amount proportionality coefficient and said apex decentricity of said first specimen surface;

a second shift and tilt amount calculator (54B) configured to calculate a shift amount and a tilt amount of said second specimen surface to said second measuring optical axis on the basis of the values of said second shift amount proportionality coefficient, said second tilt amount proportionality coefficient and said second apex decentricity of said second specimen surface; and

a device (55) configured to determine amounts of the relative decentration and tilt of said first specimen surface to said second specimen surface on the basis of the shift amount and the tilt amount of said first specimen surface, the shift amount and the tilt amount of said second specimen surface, and information on the relative position of said first interferometer to said second interferometer.

**Patentansprüche**

1. Verfahren zum Messen der Dezentrierung und der Schieflage einer ersten Probenfläche (91) eines asphärischen Objekts (9) in Bezug auf eine zweite Probenfläche (92) des asphärischen Objekts unter Verwendung eines ersten und eines zweiten Interferometers (1A, 1 B), bei dem die erste Probenfläche eine rotationssymmetrische asphärische Fläche und die zweite Probenfläche eine rotationssymmetrische asphärische Fläche oder eine sphärische Fläche ist, und relative Positionen des ersten und des zweiten Interferometers zueinander bestimmt werden, umfassend folgende Schritte:

Projizieren eines ersten Messstrahls auf die erste Probenfläche entlang einer ersten optischen Messachse (L1) des ersten Interferometers, um Bilddaten erster Interferenzstreifen aufzunehmen, die erzeugt werden durch optische Interferenz zwischen einer ersten Reflexionswellenfront des ersten Messstrahls, der von der ersten Probenfläche reflektiert wird, und einer ersten Referenzwellenfront des ersten Interferometers;

Projizieren eines zweiten Messstrahls auf die zweite Probenfläche entlang einer zweiten optischen Messachse (L2) des zweiten Interferometers, um Bilddaten von zweiten Interferenzstreifen aufzunehmen, die erzeugt werden durch optische Interferenz zwischen einer zweiten Reflexionswellenfront des zweiten, von der zweiten Probenfläche reflektierten Messstrahls und einer zweiten Referenzwellenfront des zweiten Interferometers;

Analysieren der Bilddaten der ersten Interferenzstreifen, um geometrische Daten der ersten Probenfläche zu erfassen;

Analysieren der Bilddaten der zweiten Interferenzstreifen, um geometrische Daten der zweiten Probenfläche zu erfassen;

Approximieren der geometrischen Daten der ersten Probenfläche mittels eines Zernike-Polynoms, um unter Koeffizienten einzelner Terme des Zernike-Polynoms einen Wert eines ersten Verschiebebetrag-Proportionalitäts-Koeffizienten zu berechnen, der variabel ist im Verhältnis zu einem Verschiebebetrag der ersten Probenfläche in einer Richtung rechtwinklig zu der ersten optischen Messachse, und um einen Wert eines ersten Schieflagen-Proportionalitäts-Koeffizienten zu berechnen, bei dem es sich um eine Variable im Verhältnis zu einem Schieflagenbetrag der ersten Probenfläche zu der ersten optischen Messachse handelt;

Approximieren der geometrischen Daten der zweiten Probenfläche mittels eines Zernike-Polynoms, um unter Koeffizienten der jeweiligen Terme des ZernikePolynoms einen Wert eines zweiten Verschiebebetrag-Proportionalitäts-Koeffizienten zu berechnen, bei dem es sich um eine Variable im Verhältnis zu einem Verschiebebetrag der zweiten Probenfläche in einer Richtung rechtwinklig zu der zweiten optischen Messachse handelt, und um einen Wert eines zweiten Schieflagen-Proportionalitäts-Koeffizienten zu berechnen, bei dem es sich um eine Variable im Verhältnis zu einem Schieflagenbetrag der zweiten Probenfläche zu der zweiten optischen Messachse handelt;

Berechnen eines Werts der Dezentriertheit eines Scheitelpunkts der ersten Probenfläche gegenüber der ersten optischen Messachse auf der Grundlage der geometrischen Daten der ersten Probenfläche, wobei der Wert der Scheitelpunkt-Dezentriertheit mit dem Verschiebebetrag der ersten Probenfläche in der Richtung rechtwinklig zu der ersten optischen Messachse und dem Schieflagenbetrag der ersten Probenfläche gegenüber der ersten optischen Messachse variiert;

Berechnen eines Werts der Dezentriertheit eines Scheitelpunkts der zweiten Probenfläche zu der zweiten optischen Messachse auf der Grundlage der geometrischen Daten der zweiten Probenfläche, wobei der Wert der Scheitelpunkt-Dezentriertheit mit dem Verschiebebetrag der zweiten Probenfläche in der Richtung rechtwinklig zu der zweiten optischen Messachse und dem Schieflagenbetrag der zweiten Probenfläche zu der zweiten optischen Messachse variiert;

Berechnen eines Verschiebebetrags ($s_x$, $s_y$) und eines Schieflagenbetrags ($t_x$, $t_y$) der ersten Probenfläche gegenüber der ersten optischen Messachse auf der Grundlage der Werte des ersten Verschiebebetrag-Proportionalitäts-Koeffizienten, des ersten Schieflagen-Proportionalitäts-Koeffizienten und der Scheitelpunkt-Dezentriertheit der ersten Probenfläche;

Berechnen eines Verschiebebetrags ($s_u$, $s_v$) und eines Schieflagenbetrags ($t_u$, $t_v$) der zweiten Probenfläche zu der zweiten optischen Messachse auf der Grundlage der Werte des zweiten Verschiebebetrag-Proportionalitäts-Koeffizienten, des zweiten Schieflagen-Proportionalitäts-Koeffizienten und der Scheitelpunkt-Dezentriertheit der zweiten Probenfläche; und

Berechnen von Beträgen der relativen Dezentrierung und Schieflage der ersten Probenfläche zu der zweiten Probenfläche auf der Grundlage des Verschiebebetrags und Schieflagenbetrags der ersten Probenfläche, des Verschiebebetrags und des Schieflagenbetrags der zweiten Probenfläche, und der Information über die relativen Positionen des ersten und des zweiten Interferometers.

2. Verfahren ach Anspruch 1, bei dem das Zernike-Polynom ein Zernike-Polynom Z ($p$, $\theta$) der vierten oder höheren Ordnung ist, ausgedrückt in Form von Polarkoordinaten, wobei p und $\theta$ einen Abstand von einem Pol und einen Neigungswinkel zu einer Anfangslinie darstellen, und wobei der erste Verschiebebetrag-Proportionalitäts-Koeffizient und der zweite Verschiebebetrag-Proportionalitäts-Koeffizient ein Koeffizient $Z_1$ eines Terms gemäß folgender Formel (1) bzw. ein Koeffizient $Z_2$ eines durch folgende Formel (2) ausgedrückten Terms sind:

$$\rho \cos \theta \quad \dots\dots \quad (1)$$

$$\rho \sin \theta \quad \dots\dots \quad (2)$$

3. Vorrichtung zum Messen der Dezentrierung und der Schieflage einer ersten Probenfläche (91) eines asphärischen Objekts (9) in Bezug auf eine zweite Probenfläche (92) des asphärischen Objekts, wobei die erste Probenfläche eine rotationssymmetrische asphärische Fläche und die zweite Probenfläche eine rotationssymmetrische asphärische oder eine sphärische Fläche ist, wobei die Vorrichtung umfasst:

ein erstes Interferometer (1A), konfiguriert zum Projizieren eines ersten Messstrahls auf die erste Probenfläche entlang einer ersten optischen Messachse (L1), um Bilddaten erster Interferenzstreifen aufzunehmen, die erzeugt werden durch optische Interferenz zwischen einer ersten Reflexionswellenfront des ersten Messstrahls, der von der ersten Probenfläche reflektiert wird, und einer ersten Referenzwellenfront des ersten Interferometers;

ein zweites Interferometer (1 B), konfiguriert zum Projizieren eines zweiten Messstrahls auf die zweite Probenfläche entlang einer zweiten optischen Messachse (L2), um Bilddaten von zweiten Interferenzstreifen aufzunehmen, die erzeugt werden durch optische Interferenz zwischen einer zweiten Reflexionswellenfront des zweiten, von der zweiten Probenfläche reflektierten Messstrahls und einer zweiten Referenzwellenfront des zweiten Interferometers, wobei die Position des zweiten Interferometers in Bezug auf das erste Interferometer bestimmt wird;

eine erste Probenflächen-Geometriedaten-Erfassungseinrichtung (51A), konfiguriert zum Analysieren der Bilddaten der ersten Interferenzstreifen, um geometrische Daten der ersten Probenfläche zu erfassen;

eine zweite Probenflächen-Geometriedaten-Erfassungseinrichtung (51 B), konfiguriert zum Analysieren der Bilddaten der zweiten Interferenzmuster, um geometrische Daten der zweiten Probenfläche zu erfassen;

einen ersten Zernike-Koeffizientenrechner (52A), konfiguriert zum Approximieren der geometrischen Daten der ersten Probenfläche mit einem Zernike-Polynom, um unter Koeffizienten einzelner Terme des Zernike-Polynoms einen Wert eines ersten Verschiebebetrag-Proportionalitäts-Koeffizienten zu berechnen, der variabel ist im Verhältnis zu einem Verschiebebetrag der ersten Probenfläche in einer Richtung rechtwinklig zu der ersten optischen Messachse, und um einen Wert eines ersten Schieflagen-Proportionalitäts-Koeffizienten zu berechnen, bei dem es sich um eine Variable im Verhältnis zu einem Schieflagenbetrag der ersten Probenfläche zu der ersten optischen Messachse handelt;

einen zweiten Zernike-Koeffizientenrechner (52B), konfiguriert zum Approximieren der geometrischen Daten der zweiten Probenfläche mit einem Zernike-Polynom, um einen Wert eines zweiten Verschiebebetrag-Proportionalitäts-Koeffizienten zu berechnen, bei dem es sich um eine Variable im Verhältnis zu einem Verschiebebetrag der zweiten Probenfläche in einer Richtung rechtwinklig zu der zweiten optischen Messachse handelt, und um einen Wert eines zweiten Schieflagen-Proportionalitäts-Koeffizienten zu berechnen, bei dem es sich um eine Variable im Verhältnis zu einem Schieflagenbetrag der zweiten Probenfläche zu der zweiten optischen Messachse handelt;

einen ersten Scheitelpunkt-Dezentrierungsrechner (53A), konfiguriert zum Berechnen eines Werts der Dezentriertheit eines Scheitelpunkts der ersten Probenfläche gegenüber der ersten optischen Messachse auf der Grundlage der geometrischen Daten der ersten Probenfläche, wobei der Wert der Scheitelpunkt-Dezentriertheit mit dem Verschiebebetrag der ersten Probenfläche in der Richtung rechtwinklig zu der ersten optischen Messachse und dem Schieflagenbetrag der ersten Probenfläche gegenüber der ersten optischen Messachse variiert;

einen zweiten Scheitelpunkt-Dezentriertheitsrechner (53B), konfiguriert zum Berechnen eines Werts der Dezentriertheit eines Scheitelpunkts der zweiten Probenfläche zu der zweiten optischen Messachse auf der Grundlage der geometrischen Daten der zweiten Probenfläche, wobei der Wert der Scheitelpunkt-Dezentriertheit mit dem Verschiebebetrag der zweiten Probenfläche in der Richtung rechtwinklig zu der zweiten optischen Messachse und dem Schieflagenbetrag der zweiten Probenfläche zu der zweiten optischen Messachse variiert;

einen ersten Verschiebe- und Schieflagenbetragrechner (54A), konfiguriert zum Berechnen eines Verschiebebetrags und eines Schieflagenbetrags der ersten Probenfläche in Bezug auf die erste optische Messachse auf der Grundlage der Werte des ersten Verschiebebetrag-Proportionalitäts-Koeffizienten, des ersten Schieflagen-Proportionalitäts-Koeffizienten und der Scheitelpunkt-Dezentriertheit der ersten Probenfläche;

einen zweiten Verschiebe- und Schieflagenbetragrechner (54B), konfiguriert zum Berechnen eines Verschiebebetrags und eines Schieflagenbetrags der zweiten Probenfläche in Bezug auf die zweite optische Messachse auf der Grundlage der Werte des zweiten Verschiebebetrag-Proportionalitäts-Koeffizienten, des zweiten Schieflagen-Proportionalitäts-Koeffizienten und der zweiten Scheitelpunkt-Dezentriertheit der zweiten Probenfläche; und

eine Einrichtung (55), konfiguriert zum Bestimmen der Beträge der relativen Dezentrierung und Schieflage der ersten Probenfläche gegenüber der zweiten Probenfläche auf der Grundlage des Verschiebebetrags und des Schieflagenbetrags der ersten Probenfläche, des Verschiebebetrags und des Schieflagenbetrags der zweiten Probenfläche, und der Information über die relative Position des ersten Interferometers zu dem zweiten Interferometer.

## Revendications

1. Procédé de mesure du décentrement et de l'inclinaison d'une première surface de spécimen (91) d'un objet asphérique (9) par rapport à une seconde surface de spécimen (92) dudit objet asphérique à l'aide de premier et second interféromètres (1A, 1B), dans lequel ladite première surface de spécimen est une surface asphérique symétrique sur le plan rotationnel et ladite seconde surface de spécimen est une surface asphérique symétrique sur le plan rotationnel ou une surface sphérique, et des positions relatives desdits premier et second interféromètres entre eux sont déterminées, le procédé comprenant les étapes pour :

projeter un premier faisceau de mesure sur ladite première surface de spécimen le long d'un premier axe optique de mesure (L1) dudit premier interféromètre, afin de capturer des données image de premières franges d'interférence qui sont produites par une interférence optique entre un premier front d'onde de réflexion dudit premier faisceau de mesure tel que réfléchi à partir de ladite première surface de spécimen et un premier front d'onde de référence dudit premier interféromètre ;

projeter un second faisceau de mesure sur ladite seconde surface de spécimen le long d'un second axe optique de mesure (L2) dudit second interféromètre, afin de capturer des données image de secondes franges d'interférence qui sont produites par une interférence optique entre un second front d'onde de réflexion dudit second faisceau de mesure tel que réfléchi à partir de ladite seconde surface de spécimen et un second front d'onde de référence dudit second interféromètre ;

analyser les données image desdites premières franges d'interférence afin d'acquérir des données géométriques de ladite première surface de spécimen ;

analyser les données image desdites secondes franges d'interférence afin d'acquérir des données géométriques de ladite seconde surface de spécimen ;

effectuer une approximation desdites données géométriques de ladite première surface de spécimen avec un polynôme de Zernike afin de calculer, parmi des coefficients de termes respectifs du polynôme de Zernike, une valeur d'un premier coefficient de proportionnalité pour une quantité de décalage qui est de proportion variable par rapport à une quantité de décalage de ladite première surface de spécimen dans une direction perpendiculaire audit premier axe optique de mesure et une valeur d'un premier coefficient de proportionnalité pour une quantité d'inclinaison qui est de proportion variable par rapport à une quantité d'inclinaison de ladite première surface de spécimen par rapport audit premier axe optique de mesure ;

effectuer une approximation desdites données géométriques de ladite seconde surface de spécimen avec un polynôme de Zernike afin de calculer, parmi des coefficients de termes respectifs du polynôme de Zernike, une valeur d'un second coefficient de proportionnalité pour une quantité de décalage qui est de proportion variable par rapport à une quantité de décalage de ladite seconde surface de spécimen dans une direction perpendiculaire audit second axe optique de mesure et une valeur d'un second coefficient de proportionnalité pour une quantité d'inclinaison qui est de proportion variable par rapport à une quantité d'inclinaison de ladite seconde surface de spécimen par rapport audit second axe optique de mesure ;

calculer une valeur d'excentricité d'un sommet de ladite première surface de spécimen par rapport audit premier axe optique de mesure sur la base desdites données géométriques de ladite première surface de spécimen, la valeur d'excentricité de sommet variant avec la quantité de décalage de ladite première surface de spécimen dans la direction perpendiculaire audit premier axe optique de mesure et avec la quantité d'inclinaison de ladite première surface de spécimen par rapport audit premier axe optique de mesure ;

calculer une valeur d'excentricité d'un sommet de ladite seconde surface de spécimen par rapport audit second axe optique de mesure sur la base desdites données géométriques de ladite seconde surface de spécimen, la valeur d'excentricité de sommet variant avec la quantité de décalage de ladite seconde surface de spécimen dans la direction perpendiculaire audit second axe optique de mesure et avec la quantité d'inclinaison de ladite seconde surface de spécimen par rapport audit second axe optique de mesure ;

calculer une quantité de décalage $(s_x, s_y)$ et une quantité d'inclinaison $(t_x, t_y)$ de ladite première surface de spécimen par rapport audit premier axe optique de mesure sur la base des valeurs dudit premier coefficient de proportionnalité pour la quantité de décalage, dudit premier coefficient de proportionnalité pour la quantité d'inclinaison, et de ladite excentricité de sommet de ladite première surface de spécimen ;

calculer une quantité de décalage $(s_u, s_v)$ et une quantité d'inclinaison $(t_u, t_v)$ de ladite seconde surface de spécimen par rapport audit second axe optique de mesure sur la base des valeurs dudit second coefficient de proportionnalité pour la quantité de décalage, dudit second coefficient de proportionnalité pour la quantité d'inclinaison, et de ladite excentricité de sommet de ladite seconde surface de spécimen, et

calculer des quantités de décentrement et d'inclinaison relatifs de ladite première surface de spécimen par rapport à ladite seconde surface de spécimen sur la base de la quantité de décalage et de la quantité d'inclinaison de ladite première surface de spécimen, de la quantité de décalage et de la quantité d'inclinaison de ladite seconde surface de spécimen, et des informations sur les positions relatives desdits premier et second interféromètres.

2. Procédé selon la revendication 1, dans lequel ledit polynôme de Zernike est un polynôme de Zernike $Z(\rho, \theta)$ de quatrième ordre ou plus qui est exprimé sous la forme de coordonnées polaires, $\rho$ et $\theta$ représentant une distance respectivement à partir d'un pôle et un angle d'inclinaison par rapport à une ligne initiale, et dans lequel ledit premier coefficient de proportionnalité pour la quantité de décalage et ledit second coefficient de proportionnalité pour la quantité de décalage sont un coefficient $Z_1$ d'un terme exprimé par la formule suivante (1) et un coefficient $Z_2$ d'un terme exprimé par la formule suivante (2) :

$$\rho \cos \theta \qquad \ldots\ldots \quad (1)$$

$$\rho \sin \theta \qquad \ldots\ldots \quad (2).$$

3. Appareil de mesure du décentrement et de l'inclinaison d'une première surface de spécimen (91) d'un objet asphérique (9) par rapport à une seconde surface de spécimen (92) dudit objet asphérique, dans lequel ladite première surface de spécimen est une surface asphérique symétrique sur le plan rotationnel et ladite seconde surface de spécimen est une surface asphérique symétrique sur le plan rotationnel ou une surface sphérique, ledit appareil comprenant :

un premier interféromètre (1A) configuré pour projeter un premier faisceau de mesure sur ladite première surface de spécimen le long d'un premier axe optique de mesure (L1), afin de capturer des données image de premières franges d'interférence qui sont produites par une interférence optique entre un premier front d'onde de réflexion dudit premier faisceau de mesure tel que réfléchi à partir de ladite première surface de spécimen et un premier front d'onde de référence dudit premier interféromètre ;

un second interféromètre (1B) configuré pour projeter un second faisceau de mesure sur ladite seconde surface de spécimen le long d'un second axe optique de mesure (L2), afin de capturer des données image de secondes franges d'interférence qui sont produites par une interférence optique entre un second front d'onde de réflexion dudit second faisceau de mesure tel que réfléchi à partir de ladite seconde surface de spécimen et un second front d'onde de référence dudit second interféromètre, dans lequel la position dudit second interféromètre par rapport audit premier interféromètre est déterminée ;

un premier dispositif d'acquisition de donnés géométriques de surface de spécimen (51A) configuré pour analyser les données image desdites premières franges d'interférence afin d'acquérir des données géométriques de ladite première surface de spécimen ;

un second dispositif d'acquisition de donnés géométriques de surface de spécimen (51B) configuré pour analyser les données image desdites secondes franges d'interférence afin d'acquérir des données géométriques de ladite seconde surface de spécimen ;

un premier calculateur de coefficient de Zernike (52A) configuré pour effectuer une approximation desdites données géométriques de ladite première surface de spécimen avec un polynôme de Zernike afin de calculer, parmi des coefficients de termes respectifs du polynôme de Zernike, une valeur d'un premier coefficient de proportionnalité pour une quantité de décalage qui est de proportion variable par rapport à une quantité de décalage de ladite première surface de spécimen dans une direction perpendiculaire audit premier axe optique de mesure et une valeur d'un premier coefficient de proportionnalité pour une quantité d'inclinaison qui est de proportion variable par rapport à une quantité d'inclinaison de ladite première surface de spécimen par rapport audit premier axe optique de mesure ;

un second calculateur de coefficient de Zernike (52B) configuré pour effectuer une approximation desdites données géométriques de ladite seconde surface de spécimen avec un polynôme de Zernike afin de calculer, parmi des coefficients de termes respectifs du polynôme de Zernike, une valeur d'un second coefficient de proportionnalité pour une quantité de décalage qui est de proportion variable par rapport à une quantité de décalage de ladite seconde surface de spécimen dans une direction perpendiculaire audit second axe optique de mesure et une valeur d'un second coefficient de proportionnalité pour une quantité d'inclinaison qui est de proportion variable par rapport à une quantité d'inclinaison de ladite seconde surface de spécimen par rapport audit second axe optique de mesure ;

un premier calculateur d'excentricité de sommet (53A) configuré pour calculer une valeur d'excentricité d'un sommet de ladite première surface de spécimen par rapport audit premier axe optique de mesure sur la base desdites données géométriques de ladite première surface de spécimen, la valeur d'excentricité de sommet variant avec la quantité de décalage de ladite première surface de spécimen dans la direction perpendiculaire audit premier axe optique de mesure et avec la quantité d'inclinaison de ladite première surface de spécimen par rapport audit premier axe optique de mesure ;

un second calculateur d'excentricité de sommet (53B) configuré pour calculer une valeur d'excentricité d'un sommet de ladite seconde surface de spécimen par rapport audit second axe optique de mesure sur la base desdites données géométriques de ladite seconde surface de spécimen, la valeur d'excentricité de sommet variant avec la quantité de décalage de ladite seconde surface de spécimen dans la direction perpendiculaire audit second axe optique de mesure et avec la quantité d'inclinaison de ladite seconde surface de spécimen par rapport audit second axe optique de mesure ;

un premier calculateur de quantité de décalage et d'inclinaison (54A) configuré pour calculer une quantité de décalage et une quantité d'inclinaison de ladite première surface de spécimen par rapport audit premier axe optique de mesure sur la base des valeurs dudit premier coefficient de proportionnalité pour la quantité de décalage, dudit premier coefficient de proportionnalité pour la quantité d'inclinaison, et de ladite excentricité de sommet de ladite première surface de spécimen ;

un second calculateur de quantité de décalage et d'inclinaison (54B) configuré pour calculer une quantité de décalage et une quantité d'inclinaison de ladite seconde surface de spécimen par rapport audit second axe optique de mesure sur la base des valeurs dudit second coefficient de proportionnalité pour la quantité de décalage, dudit second coefficient de proportionnalité pour la quantité d'inclinaison, et de ladite excentricité de sommet de ladite seconde surface de spécimen, et

un dispositif (55) configuré pour déterminer des quantités de décentrement et d'inclinaison relatifs de ladite première surface de spécimen par rapport à ladite seconde surface de spécimen sur la base de la quantité de décalage et de la quantité d'inclinaison de ladite première surface de spécimen, de la quantité de décalage et de la quantité d'inclinaison de ladite seconde surface de spécimen, et des informations sur le position relative dudit premier interféromètre par rapport au second interféromètre.

FIG.1

EP 2 369 319 B1

EP 2 369 319 B1

# FIG.2

# FIG.3

IMAGE DATA OF FIRST
INTERFERENCE FRINGES

IMAGE DATA OF SECOND
INTERFERENCE FRINGES

5

51A

51B

| FIRST SPECIMEN SURFACE GEOMETRIC DATA ACQUIRING DEVICE | SECOND SPECIMEN SURFACE GEOMETRIC DATA ACQUIRING DEVICE |
|---|---|

GEOMETRIC DATA
OF FIRST
SPECIMEN SURFACE

GEOMETRIC DATA
OF SECOND
SPECIMEN SURFACE

52A

52B

| FIRST ZERNIKE COEFFICIENT CALCULATOR | SECOND ZERNIKE COEFFICIENT CALCULATOR |
|---|---|

VALUES OF
RESPECTIVE
COEFFICIENTS

53A

53B

VALUES OF
RESPECTIVE
COEFFICIENTS

| FIRST APEX DECENTRICITY CALCULATOR | SECOND APEX DECENTRICITY CALCULATOR |
|---|---|

VALUE OF FIRST
APEX
DECENTRICITY

VALUE OF SECOND
APEX
DECENTRICITY

54A

54B

| FIRST SHIFT AND TILT AMOUNT CALCULATOR | SECOND SHIFT AND TILT AMOUNT CALCULATOR |
|---|---|

55

RELATIVE
POSITIONS OF ──► MISALIGNMENT CALCULATOR
INTERFEROMETERS

27

## FIG.4

## FIG.5

# FIG.6
IMAGE OF SIMULATED FIRST INTERFERENCE FRINGES

# FIG.7
IMAGE OF SIMULATED SECOND INTERFERENCE FRINGES

FIG.8

TILT SENSITIVITY OF COEFFICIENT Z1

(SIMULATED FIRST LENS SURFACE)

$a_{1(1-t)} = 0.059$

TILT AMOUNT tx (MINUTE)

# FIG.9

## TILT SENSITIVITY OF COEFFICIENT Z1

### (SIMULATED SECOND LENS SURFACE)

$a_{1(2-t)} = 0.0721$

TILT AMOUNT tu (MINUTE)

# FIG.10

## SHIFT SENSITIVITY OF COEFFICIENT Z1

### (SIMULATED FIRST LENS SURFACE)

$a_{1(1-s)} = 0.102$

SHIFT AMOUNT sx (μm)

EP 2 369 319 B1

# FIG.11
## SHIFT SENSITIVITY OF COEFFICIENT Z1
### (SIMULATED SECOND LENS SURFACE)

$a_{1(2-s)} = -0.0263$

SHIFT AMOUNT su (μm)

EP 2 369 319 B1

# FIG.12

## TILT SENSITIVITY COEFFICIENT OF APEX DECENTRICITY

### (SIMULATED FIRST LENS SURFACE)

$c_{tx} = 0.581$

EP 2 369 319 B1

# FIG.13

## SHIFT SENSITIVITY COEFFICIENT OF APEX DECENTRICITY
### (SIMULATED FIRST LENS SURFACE)

$c_{sx} = 1.000$

EP 2 369 319 B1

# FIG.14

TILT SENSITIVITY COEFFICIENT OF APEX DECENTRICITY

(SIMULATED SECOND LENS SURFACE)

$c_{tu} = -2.9346$

TILT AMOUNT tu (MINUTE)

# FIG.15

SHIFT SENSITIVITY COEFFICIENT OF APEX DECENTRICITY
(SIMULATED SECOND LENS SURFACE)

$c_{su} = 1.000$

EP 2 369 319 B1

# FIG.16

## SHIFT AMOUNT CALCULATION ERROR

### (SIMULATED FIRST LENS SURFACE)

$Q = 1.007P + 0.0083$

$Q = 1.0094P - 0.0072$

OUTPUT Q (MINUTE)

INPUT P (μm)

◆X DIRECTION  ■Y DIRECTION

EP 2 369 319 B1

# FIG.17

## SHIFT AMOUNT CALCULATION ERROR
### (SIMULATED SECOND LENS SURFACE)

$Q = 0.9724P - 0.0668$

$Q = 0.9760P - 0.0421$

◆X DIRECTION  ■Y DIRECTION

EP 2 369 319 B1

## FIG.18
### SHIFT AMOUNT CALCULATION ERROR
### (SIMULATED FIRST LENS SURFACE)

K = 0.9957 J + 0.0143

K = 0.9919J – 0.0124

OUTPUT K (MINUTE)

INPUT J (MINUTE)

◆X DIRECTION　■Y DIRECTION

## FIG.19

SHIFT AMOUNT CALCULATION ERROR
(SIMULATED SECOND LENS SURFACE)

K = 0.9902J + 0.0246

K = 0.9818J − 0.0518

INPUT J (MINUTE)

◆X DIRECTION ■Y DIRECTION

OUTPUT K (MINUTE)

**EP 2 369 319 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007033343 A
- US 2008304080 A